(19) Europäisches Patentamt
European Patent Office
Office européen des brevets

(11) **EP 4 345 525 A2**

(12) **EUROPEAN PATENT APPLICATION**

(43) Date of publication:
**03.04.2024 Bulletin 2024/14**

(21) Application number: **23200340.0**

(22) Date of filing: **28.09.2023**

(51) International Patent Classification (IPC):
**G02B 13/00** (2006.01)       **G02B 17/08** (2006.01)

(52) Cooperative Patent Classification (CPC):
**G02B 13/0045; G02B 13/0035; G02B 17/0808;**
**G02B 13/0065**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **30.09.2022 TW 111137285**

(71) Applicant: **Largan Precision Co. Ltd.**
**Taichung City 408 (TW)**

(72) Inventors:
• **TSAI, Wen-Yu**
**408 Taichung City (TW)**
• **CHEN, Shih-Han**
**408 Taichung City (TW)**
• **CHEN, Chun-Yen**
**408 Taichung City (TW)**
• **TSAI, Cheng-Yu**
**408 Taichung City (TW)**
• **TENG, Chun-Hung**
**408 Taichung City (TW)**

(74) Representative: **Lippert Stachow Patentanwälte**
**Rechtsanwälte**
**Partnerschaft mbB**
**Postfach 30 02 08**
**51412 Bergisch Gladbach (DE)**

(54) **CATADIOPTRIC OPTICAL MEMBRANE, IMAGING OPTICAL LENS ASSEMBLY, IMAGING APPARATUS AND ELECTRONIC DEVICE**

(57)    A catadioptric optical membrane, which is disposed on a surface of a substrate, includes a reflection membrane and a matting membrane. The reflection membrane is disposed on an effective optical path area of the substrate and includes a reflection metal membrane and a reflection oxidation membrane. The reflection oxidation membrane includes a first reflection oxidation membrane and a second reflection oxidation membrane. The reflection metal membrane is farther away from the substrate than the first reflection oxidation membrane. The second reflection oxidation membrane is farther away from the substrate than the reflection metal membrane. The matting membrane is disposed on a non-effective optical path area of the substrate. The matting membrane includes a deep-color membrane and a first anti-reflection membrane. The deep-color membrane includes a deep-color metal membrane and a deep-color oxidation membrane. The deep-color membrane is farther away from the substrate than the first anti-reflection membrane.

Fig. 3

**Description**

**BACKGROUND**

Technical Field

The present disclosure relates to an imaging optical lens assembly, an imaging apparatus and an electronic device. More particularly, the present disclosure relates to an imaging optical lens assembly, an imaging apparatus and an electronic device including a catadioptric optical membrane to reduce stray lights.

Description of Related Art

In recent years, it has become more and more popular to use a miniature optical lens assembly of a mobile device for photographing, wherein telephoto imaging lens assemblies are used for shooting distant scenes to achieve the function of zooming in on the subject, thus a clear quality of distant shots can be provided, and a photography experience with better highlights on the subject can be obtained. Hence, it becomes the key point for consumers to choose the telephoto imaging lens assemblies. However, the size of the optical lens assemblies with long focal lengths is large, and thus it is hard to achieve the demands of the miniature lens assembly.

In the prior, a periscope lens assembly can reduce the proportion of the height occupied by the optical system thereof, but it still needs to equip with light-reflecting elements, and the volume thereof also cannot be further compressed. Further, another application in the prior is that the catadioptric telescope uses a relatively short lens barrel to achieve the function of telephoto photography, but the stray light may be generated by the multiple reflections of light, thereby affecting the imaging quality thereof.

**SUMMARY**

According to one aspect of the present disclosure, a catadioptric optical membrane, which is disposed on a surface of a substrate, includes a reflection membrane and a matting membrane. The reflection membrane is disposed on an effective optical path area of the substrate and includes a reflection metal membrane and a reflection oxidation membrane. A main material of the reflection metal membrane is aluminum. The reflection oxidation membrane includes a first reflection oxidation membrane and a second reflection oxidation membrane, wherein the first reflection oxidation membrane includes at least two membrane layers, a main material of each of the membrane layers is an oxide, the reflection metal membrane is farther away from the substrate than the first reflection oxidation membrane, and the second reflection oxidation membrane is farther away from the substrate than the reflection metal membrane. The matting membrane is disposed on a non-effective optical path area of the substrate, wherein the matting membrane includes a deep-color membrane and a first anti-reflection membrane, the deep-color membrane includes a deep-color metal membrane and a deep-color oxidation membrane, a main material of the deep-color metal membrane is metal chrome, a main material of the deep-color oxidation membrane is chromium oxide, and the deep-color membrane is farther away from the substrate than the first anti-reflection membrane.

According to the catadioptric optical membrane of the foregoing aspect, wherein when a total membrane thickness of the first reflection oxidation membrane is Tro-s, and a total membrane thickness of the second reflection oxidation membrane is Tro-a, the following condition can be satisfied: $0.88 \leq$ Tro-s/Tro-a $\leq 1.50$.

According to the catadioptric optical membrane of the foregoing aspect, wherein the substrate can be made of a plastic material, and the surface including the catadioptric optical membrane of the substrate can be a curved surface.

According to the catadioptric optical membrane of the foregoing aspect, wherein when a total membrane thickness of the reflection metal membrane is Trm, and a total membrane thickness of the first reflection oxidation membrane is Tro-s, the following condition can be satisfied: $1.05 \leq$ Trm/Tro-s $\leq 4.90$.

According to the catadioptric optical membrane of the foregoing aspect, wherein when a total membrane thickness of the reflection metal membrane is Trm, and a total membrane thickness of the second reflection oxidation membrane is Tro-a, and the following condition can be satisfied: $0.88 \leq$ Trm/Tro-a $\leq 10.00$.

According to the catadioptric optical membrane of the foregoing aspect, wherein the first reflection oxidation membrane can include a substrate high-refractive-index oxidation membrane and a substrate low-refractive-index oxidation membrane, the substrate low-refractive-index oxidation membrane can be farther away from the substrate than the substrate high-refractive-index oxidation membrane, and when a refractive index of the substrate high-refractive-index oxidation membrane is Nro-s1, and a refractive index of the substrate low-refractive-index oxidation membrane is Nro-s2, the following condition can be satisfied: Nro-s1 > Nro-s2.

According to the catadioptric optical membrane of the foregoing aspect, wherein when the refractive index of the substrate high-refractive-index oxidation membrane is Nro-s1, and the refractive index of the substrate low-refractive-index oxidation membrane is Nro-s2, and the following conditions can be satisfied: $2.00 \leq$ Nro-s1 $\leq 4.00$; and $1.00 \leq$ Nro-s2 $\leq 1.80$.

According to the catadioptric optical membrane of the foregoing aspect, wherein the second reflection oxidation membrane can include an air high-refractive-index oxidation membrane and an air low-refractive-index oxidation membrane, the air high-refractive-index oxidation membrane can be farther away from the substrate than the air low-refractive-index oxidation membrane, and when a refractive index of the air high-refractive-index oxidation membrane is Nro-a1, and a refractive index of the air low-refractive-index oxidation membrane is Nro-a2, and the following condition can be satisfied: Nro-a1 > Nro-a2.

According to the catadioptric optical membrane of the foregoing aspect, wherein when the refractive index of the air high-refractive-index oxidation membrane is Nro-a1, and the refractive index of the air low-refractive-index oxidation membrane is Nro-a2, the following conditions can be satisfied: $2.00 \leq$ Nro-a1 $\leq 4.00$; and $1.00 \leq$ Nro-a2 $\leq 1.80$.

According to the catadioptric optical membrane of the foregoing aspect, wherein when an average reflectance in a wavelength range of 400 nm - 700 nm of the reflection membrane is R4070-r, the following condition can be satisfied: $90.0\% \leq$ R4070-r.

According to the catadioptric optical membrane of the foregoing aspect, wherein when a total membrane thickness of the matting membrane is tTKe, the following condition can be satisfied: 200 nm $\leq$ tTKe $\leq$ 2000 nm.

According to the catadioptric optical membrane of the foregoing aspect, wherein when a total membrane thickness of the matting membrane is tTKe, and a total membrane thickness of the deep-color membrane is Ted, the following condition can be satisfied: $0.10 \leq$ Ted/tTKe $\leq 0.95$.

According to the catadioptric optical membrane of the foregoing aspect, wherein when a total membrane thickness of the first anti-reflection membrane is Tea-s, the following condition can be satisfied: 50 nm $\leq$ Tea-s $\leq$ 1000 nm.

According to the catadioptric optical membrane of the foregoing aspect, wherein when a total membrane thickness of the deep-color membrane is Ted, and a total membrane thickness of the deep-color metal membrane is Ted-cr, the following condition can be satisfied: $0.05 \leq$ Ted-cr/Ted $\leq 0.85$.

According to the catadioptric optical membrane of the foregoing aspect, wherein when an average reflectance in a wavelength range of 400 nm - 700 nm of the matting membrane is R4070-e, and an average transmittance in the wavelength range of 400 nm - 700 nm of the matting membrane is T4070-e, the following conditions can be satisfied: $0\% <$ R4070-e $\leq 1.00\%$; and $0\% < 100 \times$ T4070-e $\leq 5.00\%$.

According to the catadioptric optical membrane of the foregoing aspect, wherein the matting membrane can further include a second anti-reflection membrane, and the second anti-reflection membrane can be farther away from the substrate than the deep-color membrane.

According to the catadioptric optical membrane of the foregoing aspect, wherein the matting membrane can further include a gradient refraction membrane, the gradient refraction membrane can include a plurality of pores, the pores away from the substrate are relatively larger than the pores close to the substrate, and the gradient refraction membrane can be farther away from the substrate than the deep-color membrane.

According to one aspect of the present disclosure, an imaging optical lens assembly includes, in order from an object side to an image side along an optical path, a catadioptric lens assembly and a telephoto lens assembly. The catadioptric lens assembly includes at least one lens element, wherein the at least one lens element has an object-side surface towards the object side and an image-side surface towards the image side, and at least one surface of the at least one lens element includes a catadioptric optical membrane. The catadioptric optical membrane includes a reflection membrane and a matting membrane. The reflection membrane is disposed on an effective optical path area of the at least one lens element and includes a reflection metal membrane and a reflection oxidation membrane. A main material of the reflection metal membrane is aluminum. The reflection oxidation membrane includes a first reflection oxidation membrane and a second reflection oxidation membrane, wherein the first reflection oxidation membrane includes at least two membrane layers, a main material of each of the membrane layers is an oxide, the reflection metal membrane is farther away from the at least one lens element than the first reflection oxidation membrane, and the second reflection oxidation membrane is farther away from the at least one lens element than the reflection metal membrane. The matting membrane is disposed on a non-effective optical path area of the at least one lens element, wherein the matting membrane includes a deep-color membrane and a first anti-reflection membrane, the deep-color membrane includes a deep-color metal membrane and a deep-color oxidation membrane, a main material of the deep-color metal membrane is metal chrome, a main material of the deep-color oxidation membrane is chromium oxide, and the deep-color membrane is farther away from the at least one lens element than the first anti-reflection membrane.

According to the imaging optical lens assembly of the foregoing aspect, wherein the at least one lens element can be made of a plastic material, and the surface including the catadioptric optical membrane of the at least one lens element can be a curved surface.

According to the imaging optical lens assembly of the foregoing aspect, wherein: the catadioptric lens assembly can include a transmissive area and a reflective area, both the transmissive area and the reflective area are located in the effective optical path area of the at least one lens element, and the reflective area can include the reflection membrane;

and the reflective area can include a first reflective surface and a second reflective surface, and the second reflective surface can be located on the object-side surface of the at least one lens element.

According to the imaging optical lens assembly of the foregoing aspect, wherein: the transmissive area can include at least one transmissive surface, and the transmissive surface can be located on the object-side surface of the at least one lens element; and the non-effective optical path area can include at least one matting surface, the matting surface can be located on the object-side surface of the at least one lens element and can be located between the transmissive surface and the second reflective surface, and the matting surface can include the matting membrane.

According to the imaging optical lens assembly of the foregoing aspect, wherein: the first reflective surface can be located on the image-side surface of the at least one lens element; the transmissive area can include a first transmissive surface and a last transmissive surface, the first transmissive surface can be located on the object-side surface of the at least one lens element, and the last transmissive surface can be located on the image-side surface of the at least one lens element; and the non-effective optical path area can include a first matting surface and a second matting surface, the first matting surface can be located on the object-side surface of the at least one lens element and can be located between the first transmissive surface and the second reflective surface, the second matting surface can be located on the image-side surface of the at least one lens element and can be located between the first reflective surface and the last transmissive surface, and both the first matting surface and the second matting surface can include the matting membrane.

According to the imaging optical lens assembly of the foregoing aspect, wherein the telephoto lens assembly can include at least two lens elements, and at least one surface of the at least two lens elements can include at least one inflection point.

According to the imaging optical lens assembly of the foregoing aspect, wherein an object side of the second reflective surface can include the matting membrane.

According to the imaging optical lens assembly of the foregoing aspect, wherein: the catadioptric lens assembly (11, 21) can include a first lens element, a second lens element, a transmissive area and a reflective area, and the first lens element can be closer to the object side than the second lens element; both the transmissive area and the reflective area are located in the effective optical path area of the at least one lens element, and the reflective area can include the reflection membrane; and the reflective area can include a first reflective surface and a second reflective surface, the first reflective surface can be located on an image-side surface of the second lens element, and the second reflective surface can be located on an object-side surface of the first lens element.

According to the imaging optical lens assembly of the foregoing aspect, wherein the non-effective optical path area can include at least one matting surface, the matting surface can be located on the object-side surface of the first lens element and can be located between a first transmissive surface of the transmissive area and the second reflective surface, and the matting surface can include the matting membrane.

According to the imaging optical lens assembly of the foregoing aspect, wherein an object-side surface of the second lens element can be convex in a paraxial region thereof, the telephoto lens assembly can include at least three lens elements, and at least one surface of the at least three lens elements can include at least one inflection point.

According to the imaging optical lens assembly of the foregoing aspect, wherein an object side of the second reflective surface can include the matting membrane.

According to one aspect of the present disclosure, an imaging apparatus includes the imaging optical lens assembly according to the aforementioned aspect and an image sensor disposed on an image surface of the imaging optical lens assembly.

According to the imaging apparatus of the foregoing aspect, wherein at least one surface of the at least one lens element can include a gradient refraction membrane, the gradient refraction membrane can include a plurality of pores, and the pores away from the at least one lens element are relatively larger than the pores close to the at least one lens element.

According to the imaging apparatus of the foregoing aspect, wherein the imaging optical lens assembly further can include at least one optical element, at least one surface of the at least one optical element can include a gradient refraction membrane, the gradient refraction membrane can include a plurality of pores, and the pores away from the at least one optical element are relatively larger than the pores close to the at least one optical element.

According to one aspect of the present disclosure, an electronic device includes the imaging apparatus according to the aforementioned aspect.

## BRIEF DESCRIPTION OF THE DRAWINGS

The present disclosure can be more fully understood by reading the following detailed description of the embodiment, with reference made to the accompanying drawings as follows:

Fig. 1 is a relationship diagram between the reflectance and the wavelengths of a reflection membrane of a catadioptric optical membrane according to Example 1 of the present disclosure.

Fig. 2 is a relationship diagram between the transmittance and the wavelengths of a deep-color membrane of a matting membrane of a catadioptric optical membrane according to Example 2 of the present disclosure.

Fig. 3 is a schematic view of an imaging optical lens assembly according to Example 4 of the present disclosure.

Fig. 4 is a schematic view of an imaging optical lens assembly according to Example 5 of the present disclosure.

Fig. 5 is a schematic view of an electronic device according to Example 6 of the present disclosure.

Fig. 6 is a schematic view of an electronic device according to Example 7 of the present disclosure.

Fig. 7A is a schematic view of one side of an electronic device according to Example 8 of the present disclosure.

Fig. 7B is a schematic view of another side of the electronic device of Fig. 7A.

## DETAILED DESCRIPTION

One embodiment of the present disclosure provides a catadioptric optical membrane, the catadioptric optical membrane is disposed on a surface of a substrate, and the catadioptric optical membrane includes a reflection membrane and a matting membrane. The reflection membrane is disposed on an effective optical path area of the substrate, and the reflection membrane includes a reflection metal membrane and a reflection oxidation membrane. A main material of the reflection metal membrane is aluminum. The reflection oxidation membrane includes a first reflection oxidation membrane and a second reflection oxidation membrane, wherein the first reflection oxidation membrane includes at least two membrane layers, and a main material of each of the membrane layers is an oxide. The reflection metal membrane is farther away from the substrate than the first reflection oxidation membrane, and the second reflection oxidation membrane is farther away from the substrate than the reflection metal membrane. The matting membrane is disposed on a non-effective optical path area of the substrate, wherein the matting membrane includes a deep-color membrane and a first anti-reflection membrane, and the deep-color membrane includes a deep-color metal membrane and a deep-color oxidation membrane. A main material of the deep-color metal membrane is metal chrome, a main material of the deep-color oxidation membrane is chromium oxide, and the deep-color membrane is farther away from the substrate than the first anti-reflection membrane.

Therefore, by the arrangement that the reflection membrane and the matting membrane of the catadioptric optical membrane of the present disclosure are respectively coated on the relative positions of the substrate, it is favorable for achieving the effect that the light remains bright and clear after multiple reflections, and the effect of low stray light can be obtained. Further, by arranging an oxidation membrane with multi-layers on a light-incident side of the reflection metal membrane, the light can constructively interfere between the membrane layers, so that the aim of improving the reflection of the light can be achieved, and the entering amount of light in the image sensor can be increased. Furthermore, by arranging another oxidation membrane on another side of the reflection metal membrane, the weakening of reflection intensity caused by the loss of luster of the metal due to oxidation can be prevented, and it is favorable for further reducing the generation of the stray light due to the multiple reflections. Moreover, by the arrangements that the matting membrane is disposed on the non-effective optical path area and the design of the anti-reflection membrane, and the low-penetration property of metallic chromium as well as the deep-color effect provided by the chromium oxide, the design of low reflection and low transmittance of the optical coating membrane can be achieved on the non-effective optical path area, and it is favorable for reducing the generation of the stray light so as to enhance the imaging quality.

When a total membrane thickness of the first reflection oxidation membrane is Tro-s, and a total membrane thickness of the second reflection oxidation membrane is Tro-a, the following condition can be satisfied: $0.88 \leq$ Tro-s/Tro-a $\leq 1.50$. Therefore, by adjusting the thickness ratio of the first reflection oxidation membrane and the second reflection oxidation membrane, it is favorable for enhancing the reflection of light and the anti-oxidation of metal. Furthermore, the following condition can be satisfied: $0.89 \leq$ Tro-s/Tro-a $\leq 1.40$. Furthermore, the following condition can be satisfied: $0.90 \leq$ Tro-s/Tro-a $\leq 1.30$. Furthermore, the following condition can be satisfied: $0.92 \leq$ Tro-s/Tro-a $\leq 1.20$. Furthermore, the following condition can be satisfied: $0.95 \leq$ Tro-s/Tro-a $\leq 1.10$. Furthermore, the following condition can be satisfied: $0.98 \leq$ Tro-s/Tro-a $\leq 1.05$.

According to the catadioptric optical membrane of the present disclosure, the substrate can be made of a plastic material, and the surface including the catadioptric optical membrane of the substrate is a curved surface. Therefore, by arranging the catadioptric optical membrane on the substrate having a curved surface, it is favorable for increasing the freedom in optical design.

When a total membrane thickness of the reflection metal membrane is Trm, and the total membrane thickness of the first reflection oxidation membrane is Tro-s, the following condition can be satisfied: $1.05 \leq$ Trm/Tro-s $\leq 4.90$. Therefore, by increasing the proportion of the membrane thickness of the first reflection oxidation membrane, it is favorable for enhancing the reflectance thereof. Furthermore, the following condition can be satisfied: $1.08 \leq$ Trm/Tro-s $\leq 4.00$. Furthermore, the following condition can be satisfied: $1.10 \leq$ Trm/Tro-s $\leq 3.00$. Furthermore, the following condition can be satisfied: $1.12 \leq$ Trm/Tro-s $\leq 2.50$. Furthermore, the following condition can be satisfied: $1.13 \leq$ Trm/Tro-s $\leq 2.00$. Furthermore, the following condition can be satisfied: $1.15 \leq$ Trm/Tro-s $\leq 1.50$.

When the total membrane thickness of the reflection metal membrane is Trm, and the total membrane thickness of the second reflection oxidation membrane is Tro-a, the following condition can be satisfied: $0.88 \leq$ Trm/Tro-a $\leq 10.00$. Therefore, by increasing the proportion of the membrane thickness of the second reflection oxidation membrane, it is favorable for increasing the durability of the coating membrane and maintaining the reflection effect of the reflection metal membrane. Furthermore, the following condition can be satisfied: $0.95 \leq$ Trm/Tro-a $\leq 8.00$. Furthermore, the following condition can be satisfied: $1.00 \leq$ Trm/Tro-a $\leq 5.00$. Furthermore, the following condition can be satisfied: $1.05 \leq$ Trm/Tro-a $\leq 3.00$. Furthermore, the following condition can be satisfied: $1.10 \leq$ Trm/Tro-a $\leq 2.00$. Furthermore, the following condition can be satisfied: $1.15 \leq$ Trm/Tro-a $\leq 1.50$.

The first reflection oxidation membrane can include a substrate high-refractive-index oxidation membrane and a substrate low-refractive-index oxidation membrane, and the substrate low-refractive-index oxidation membrane is farther away from the substrate than the substrate high-refractive-index oxidation membrane. When a refractive index of the substrate high-refractive-index oxidation membrane is Nro-s1, and a refractive index of the substrate low-refractive-index oxidation membrane is Nro-s2, the following condition can be satisfied: Nro-s1 > Nro-s2. Therefore, when the light enters the reflection membrane from the substrate, it is favorable for achieving the aim of increasing the reflection of light by alternately stacking a plurality of oxide membranes with different refractive indices.

When the refractive index of the substrate high-refractive-index oxidation membrane is Nro-s1, and the refractive index of the substrate low-refractive-index oxidation membrane is Nro-s2, the following conditions can be satisfied: $2.00 \leq$ Nro-s1 $\leq 4.00$; and $1.00 \leq$ Nro-s2 $\leq 1.80$. Therefore, when the light enters the reflection membrane from the substrate, the constructive interference of light between the membrane layers can be obtained by alternately stacking a plurality of oxide membranes with different refractive indices so as to strengthen the reflection ability of the reflection membrane. Furthermore, the following conditions can be satisfied: $2.05 \leq$ Nro-s1 $\leq 3.50$; and $1.10 \leq$ Nro-s2 $\leq 1.75$. Furthermore, the following conditions can be satisfied: $2.10 \leq$ Nro-s1 $\leq 3.00$; and $1.20 \leq$ Nro-s2 $\leq 1.70$. Furthermore, the following conditions can be satisfied: $2.15 \leq$ Nro-s1 $\leq 2.80$; and $1.30 \leq$ Nro-s2 $\leq 1.65$. Furthermore, the following conditions can be satisfied: $2.20 \leq$ Nro-s1 $\leq 2.50$; and $1.35 \leq$ Nro-s2 $\leq 1.55$. Furthermore, the following conditions can be satisfied: $2.25 \leq$ Nro-s1 $\leq 2.40$; and $1.40 \leq$ Nro-s2 $\leq 1.50$.

The second reflection oxidation membrane can include an air high-refractive-index oxidation membrane and an air low-refractive-index oxidation membrane, and the air high-refractive-index oxidation membrane is farther away from the substrate than the air low-refractive-index oxidation membrane. When a refractive index of the air high-refractive-index oxidation membrane is Nro-a1, and a refractive index of the air low-refractive-index oxidation membrane is Nro-a2, the following condition can be satisfied: Nro-a1 > Nro-a2. Therefore, when the light enters the reflection membrane from the substrate, it is favorable for achieving the aim of increasing the reflection of light and enhancing the ability of metals to resist oxidation by alternately stacking a plurality of oxide membranes with different refractive indices.

When the refractive index of the air high-refractive-index oxidation membrane is Nro-a1, and the refractive index of the air low-refractive-index oxidation membrane is Nro-a2, the following conditions can be satisfied: $2.00 \leq$ Nro-a1 $\leq 4.00$; and $1.00 \leq$ Nro-a2 $\leq 1.80$. Therefore, when the light enters the reflection membrane from the air, the light can constructively interfere between the membrane layers by alternately stacking a plurality of oxide membranes with different refractive indices, so that the reflection ability of the reflection membrane can be strengthened and the ability of metals to resist oxidation can be enhanced. Furthermore, the following conditions can be satisfied: $2.05 \leq$ Nro-a1 $\leq 3.50$; and $1.10 \leq$ Nro-a2 $\leq 1.75$. Furthermore, the following conditions can be satisfied: $2.10 \leq$ Nro-a1 $\leq 3.00$; and $1.20 \leq$ Nro-a2 $\leq 1.70$. Furthermore, the following conditions can be satisfied: $2.15 \leq$ Nro-a1 $\leq 2.80$; and $1.30 \leq$ Nro-a2 $\leq 1.65$. Furthermore, the following conditions can be satisfied: $2.20 \leq$ Nro-a1 $\leq 2.50$; and $1.35 \leq$ Nro-a2 $\leq 1.55$. Furthermore, the following conditions can be satisfied: $2.25 \leq$ Nro-a1 $\leq 2.40$; and $1.40 \leq$ Nro-a2 $\leq 1.50$.

When an average reflectance in a wavelength range of 400 nm - 700 nm of the reflection membrane is R4070-r, the following condition can be satisfied: $90.0\% \leq$ R4070-r. Therefore, the reflectance of the reflection membrane can be effectively enhanced, and it is favorable for increasing the intensity of optical illumination. Furthermore, the following condition can be satisfied: $91.0\% \leq$ R4070-r. Furthermore, the following condition can be satisfied: $92.0\% \leq$ R4070-r. Furthermore, the following condition can be satisfied: $93.0\% \leq$ R4070-r. Furthermore, the following condition can be satisfied: $94.0\% \leq$ R4070-r. Furthermore, the following condition can be satisfied: $95.0\% \leq$ R4070-r.

When a total membrane thickness of the matting membrane is tTKe, the following condition can be satisfied: 200 nm $\leq$ tTKe $\leq$ 2000 nm. Therefore, by controlling the total membrane thickness of the matting membrane, it is favorable for achieving the aims of low reflection and low transmittance. Furthermore, the following condition can be satisfied: 300

nm $\leq$ tTKe $\leq$ 1800 nm. Furthermore, the following condition can be satisfied: 400 nm $\leq$ tTKe $\leq$ 1500 nm. Furthermore, the following condition can be satisfied: 500 nm $\leq$ tTKe $\leq$ 1200 nm. Furthermore, the following condition can be satisfied: 550 nm $\leq$ tTKe $\leq$ 1000 nm. Furthermore, the following condition can be satisfied: 600 nm $\leq$ tTKe $\leq$ 800 nm.

When the total membrane thickness of the matting membrane is tTKe, and a total membrane thickness of the deep-color membrane is Ted, the following condition can be satisfied: 0.10 $\leq$ Ted/tTKe $\leq$ 0.95. Therefore, by controlling the proportion of the membrane thickness of the deep-color membrane to the overall membrane thickness of the matting membrane, it is favorable for preventing the unnecessary light from entering the optical system and affecting the imaging quality. Furthermore, the following condition can be satisfied: 0.20 $\leq$ Ted/tTKe $\leq$ 0.90. Furthermore, the following condition can be satisfied: 0.30 $\leq$ Ted/tTKe $\leq$ 0.80. Furthermore, the following condition can be satisfied: 0.40 $\leq$ Ted/tTKe $\leq$ 0.70. Furthermore, the following condition can be satisfied: 0.45 $\leq$ Ted/tTKe $\leq$ 0.75. Furthermore, the following condition can be satisfied: 0.50 $\leq$ Ted/tTKe $\leq$ 0.60.

When a total membrane thickness of the first anti-reflection membrane is Tea-s, the following condition can be satisfied: 50 nm $\leq$ Tea-s $\leq$ 1000 nm. Therefore, by controlling the first anti-reflection membrane to achieve a specific thickness, the reflected light is easy to produce the destructive interference on the surfaces of the spaced membrane layers, and it is favorable for enhancing the anti-reflective effect. Furthermore, the following condition can be satisfied: 60 nm $\leq$ Tea-s $\leq$ 800 nm. Furthermore, the following condition can be satisfied: 70 nm $\leq$ Tea-s $\leq$ 600 nm. Furthermore, the following condition can be satisfied: 80 nm $\leq$ Tea-s $\leq$ 400 nm. Furthermore, the following condition can be satisfied: 85 nm $\leq$ Tea-s $\leq$ 300 nm. Furthermore, the following condition can be satisfied: 90 nm $\leq$ Tea-s $\leq$ 200 nm.

When the total membrane thickness of the deep-color membrane is Ted, and a total membrane thickness of the deep-color metal membrane is Ted-cr, the following condition can be satisfied: 0.05 $\leq$ Ted-cr/Ted $\leq$ 0.85. Therefore, by controlling the proportion of the membrane thickness of the deep-color metal membrane to the membrane thickness of the deep-color membrane, it is favorable for strengthening the low transmittance property of the matting membrane. Furthermore, the following condition can be satisfied: 0.10 $\leq$ Ted-cr/Ted $\leq$ 0.75. Furthermore, the following condition can be satisfied: 0.15 $\leq$ Ted-cr/Ted $\leq$ 0.65. Furthermore, the following condition can be satisfied: 0.20 $\leq$ Ted-cr/Ted $\leq$ 0.55. Furthermore, the following condition can be satisfied: 0.25 $\leq$ Ted-cr/Ted $\leq$ 0.50. Furthermore, the following condition can be satisfied: 0.30 $\leq$ Ted-cr/Ted $\leq$ 0.45.

When an average reflectance in a wavelength range of 400 nm - 700 nm of the matting membrane is R4070-e, and an average transmittance in the wavelength range of 400 nm - 700 nm of the matting membrane is T4070-e, the following conditions can be satisfied: 0% < R4070-e $\leq$ 1.00%; and 0% < 100 $\times$ T4070-e $\leq$ 5.00%. Therefore, by maintaining the design of low reflection and low transmittance of the optical coating membrane in the matting membrane, it is favorable for reducing the generation of the stray light. Furthermore, the following conditions can be satisfied: 0.01% $\leq$ R4070-e $\leq$ 0.80%; and 0.01% $\leq$ 100 $\times$ T4070-e $\leq$ 4.00%. Furthermore, the following conditions can be satisfied: 0.02% $\leq$ R4070-e $\leq$ 0.60%; and 0.10% $\leq$ 100 $\times$ T4070-e $\leq$ 2.00%. Furthermore, the following conditions can be satisfied: 0.03% $\leq$ R4070-e $\leq$ 0.40%; and 0.20% $\leq$ 100 $\times$ T4070-e $\leq$ 1.00%. Furthermore, the following conditions can be satisfied: 0.04% $\leq$ R4070-e $\leq$ 0.30%; and 0.25% $\leq$ 100 $\times$ T4070-e $\leq$ 0.75%. Furthermore, the following conditions can be satisfied: 0.05% $\leq$ R4070-e $\leq$ 0.20%; and 0.30% $\leq$ 100 $\times$ T4070-e $\leq$ 0.45%.

The matting membrane can further include a second anti-reflection membrane, and the second anti-reflection membrane is farther away from the substrate than the deep-color membrane. Therefore, by arranging an anti-reflection membrane on the outside of the deep-color membrane, it is favorable for enhancing the anti-reflective effect along the direction from the outside to the inside.

The matting membrane can further include a gradient refraction membrane. The gradient refraction membrane includes a plurality of pores, the pores away from the substrate are relatively larger than the pores close to the substrate, and the gradient refraction membrane is farther away from the substrate than the deep-color membrane. Therefore, it is favorable for enhancing the anti-reflective effect along the direction from the outside to the inside.

Each of the aforementioned features of the catadioptric optical membrane of the present disclosure can be utilized in numerous combinations, so as to achieve the corresponding functionality.

Another embodiment of the present disclosure provides an imaging optical lens assembly, and the imaging optical lens assembly includes, in order from an object side to an image side along an optical path, a catadioptric lens assembly and a telephoto lens assembly. The catadioptric lens assembly includes at least one lens element, the lens element has an object-side surface towards the object side and an image-side surface towards the image side, and at least one surface of the lens element includes a catadioptric optical membrane. Wherein, the catadioptric optical membrane includes a reflection membrane and a matting membrane. The reflection membrane is disposed on an effective optical path area of the lens element, and the reflection membrane includes a reflection metal membrane and a reflection oxidation membrane. A main material of the reflection metal membrane is aluminum. The reflection oxidation membrane includes a first reflection oxidation membrane and a second reflection oxidation membrane. The first reflection oxidation membrane includes at least two membrane layers, a main material of each of the membrane layers is an oxide, the reflection metal membrane is farther away from the lens element than the first reflection oxidation membrane, and the second reflection oxidation membrane is farther away from the lens element than the reflection metal membrane. The matting membrane is disposed on a non-effective optical path area of the lens element, wherein the matting membrane includes a deep-color membrane and a first anti-reflection membrane, and the deep-color membrane includes a deep-color metal membrane and a deep-color oxidation membrane. A main material of the deep-color metal membrane is metal chrome, a main material of the deep-color oxidation membrane is chromium oxide, and the deep-color membrane is farther away from the lens element than the first anti-reflection membrane. Therefore, by coating the catadioptric optical membrane on the imaging optical lens assembly, the total track length and the size of the imaging optical lens assembly can be reduced, and it is favorable for reducing the needs for the arrangement of the optical elements.

According to the imaging optical lens assembly of the present disclosure, the lens element can be made of a plastic material, and the surface including the catadioptric optical membrane of the lens element is a curved surface. Therefore, by arranging the catadioptric optical membrane on the lens element having a curved surface, it is favorable for increasing the freedom in optical design.

According to the imaging optical lens assembly of the present disclosure, the catadioptric lens assembly can include a transmissive area and a reflective area. Both the transmissive area and the reflective area are located in the effective optical path area of the lens element, and the reflective area includes the reflection membrane. The reflective area can include a first reflective surface and a second reflective surface, and the second reflective surface is located on the object-side surface of the lens element. Therefore, by arranging the reflection membrane on the lens element, it is favorable for reducing the arrangement of the optical path and the total track length of the imaging optical lens assembly, and a smaller field of view can be achieved under the same thickness of the lens element.

According to the imaging optical lens assembly of the present disclosure, the transmissive area can include at least one transmissive surface, and the transmissive surface is located on the object-side surface of the lens element. The non-effective optical path area can include at least one matting surface, the matting surface is located on the object-side surface of the lens element and is located between the transmissive surface and the second reflective surface, and the matting surface includes the matting membrane. Therefore, by arranging the matting membrane between the transmissive surface and the reflective surface, it is favorable for preventing the external light from entering the imaging optical lens assembly from the non-effective optical path area, and the generation of the unnecessary light spots to affect the imaging quality can be reduced.

According to the imaging optical lens assembly of the present disclosure, the first reflective surface can be located on the image-side surface of the lens element. The transmissive area can include a first transmissive surface and a last transmissive surface, the first transmissive surface is located on the object-side surface of the lens element, and the last transmissive surface is located on the image-side surface of the lens element. The non-effective optical path area can include a first matting surface and a second matting surface, the first matting surface is located on the object-side surface of the lens element and is located between the first transmissive surface and the second reflective surface, the second matting surface is located on the image-side surface of the lens element and is located between the first reflective surface and the last transmissive surface, and both the first matting surface and the second matting surface include the matting membrane. Therefore, by arranging the matting membrane on the object side and the image side of the lens element, the matting membrane on the object side is favorable for preventing the external light from entering the imaging optical lens assembly from the non-effective optical path area, and the matting membrane on the image side is favorable for reducing the generation of the stray light in the non-effective optical path area due to the multiple reflections. Thus, the generation of the unnecessary light spots to affect the imaging quality can be reduced.

According to the imaging optical lens assembly of the present disclosure, the telephoto lens assembly can include at least two lens elements. Therefore, it is favorable for increasing the freedom of the design of the imaging optical lens assembly, and the imaging quality can be enhanced. Further, at least one surface of the at least two lens elements can include at least one inflection point. Therefore, it is favorable for correcting and compensating the peripheral image aberration.

According to the imaging optical lens assembly of the present disclosure, an object side of the second reflective surface can include the matting membrane. Therefore, by arranging the matting membrane on the outside of the reflection membrane, it is favorable for enhancing the anti-reflective effect along the direction from the outside to the inside of the imaging optical lens assembly.

According to the imaging optical lens assembly of the present disclosure, the catadioptric lens assembly can include a first lens element, a second lens element, a transmissive area and a reflective area, and the first lens element is closer to the object side than the second lens element. Both the transmissive area and the reflective area can be located in the effective optical path area of the lens element, and the reflective area includes the reflection membrane. The reflective area can include a first reflective surface and a second reflective surface, the first reflective surface is located on an image-side surface of the second lens element, and the second reflective surface is located on an object-side surface of the first lens element. Therefore, by arranging the reflection membrane on the first lens element and the second lens element, it is favorable for reducing the arrangement of the optical path and the total track length of the imaging optical lens assembly, and a smaller field of view can be achieved under the same thickness of the lens elements.

According to the imaging optical lens assembly of the present disclosure, the non-effective optical path area can include at least one matting surface, the matting surface is located on the object-side surface of the first lens element and is located between a first transmissive surface of the transmissive area and the second reflective surface, and the matting surface includes the matting membrane. Therefore, by arranging the matting membrane between the transmissive surface and the reflective surface, it is favorable for preventing the external light from entering the imaging optical lens assembly from the non-effective optical path area, and the generation of the unnecessary light spots to affect the imaging quality can be reduced.

According to the imaging optical lens assembly of the present disclosure, an object-side surface of the second lens element can be convex in a paraxial region thereof. The telephoto lens assembly can include at least three lens elements, and at least one surface of the at least three lens elements includes at least one inflection point. Therefore, it is favorable for converging the light behind the second reflective surface, and the entering amount of light can be increased.

According to the imaging optical lens assembly of the present disclosure, the object side of the second reflective surface can include the matting membrane. Therefore, by arranging the matting membrane on the outside of the reflection membrane, it is favorable for enhancing the anti-reflective effect along the direction from the outside to the inside of the imaging optical lens assembly.

Each of the aforementioned features of the imaging optical lens assembly of the present disclosure can be utilized in numerous combinations, so as to achieve the corresponding functionality.

In the present disclosure, the optical path area can be classified to the effective optical path area and the non-effective optical path area. The effective optical path area is defined based on the incident light passing through the imaging optical lens assembly from the object side and then imaging on the image surface. The non-effective optical path area is defined based on the incident light passing through the imaging optical lens assembly from the object side and then without imaging on the image surface. The non-effective optical path area of the imaging optical lens assembly can be formed by the matting membrane of the present disclosure, and the optical coatings are also available, such as the black ink spraying layer formed by the epoxy resin or a fast-drying ink based on acrylate polymers, the blackened coating layer or the photoresistive coating layer formed by the chemical vapor deposition, or other deep-color coatings with the light absorbing effect. The optical coatings are easy to apply and adhere on the surface of the element, and thus it is favorable for mass processing and manufacturing.

In the present disclosure, the effective light is defined as the light passing through the effective optical path area of the lens element from the object side and then imaging on the image surface, and the stray light passing through the non-effective optical path area of the lens element is not included.

In the present disclosure, the central axis is an axis of an axisymmetric optical system including at least two rotationally symmetric reflective surfaces or a common axis of the two refractive surfaces. The paraxial region represents a relatively narrow region near the central axis and including the central axis.

In the present disclosure, the substrate can be an optical lens element or an optical element, and the optical element can be a filter, a cover glass, a light path folding element, a diffraction element (such as a Fresnel lens), a light-blocking element, an annular spacer element, a barrel element, or a micro lens disposed on the image sensor. The filter can include a blue glass, an IR cut filter, a color filter, a bandpass filter, or a low-pass filter. The cover glass can include a protect mirror disposed on the most object side of the imaging optical lens assembly, a glass sheet disposed around the substrate of the image sensor, or a glass sheet used to protect the image sensor. The light path folding element can include a prism or a mirror. The light-blocking element, the annular spacer element and the barrel element can include a plate element made of a glass or a plastic material which is disposed on an optical effective diameter area, and at least one surface of the plate element includes an anti-reflection membrane.

In the present disclosure, the outside refers to the side closer to the air, and the inner side refers to the side closer to the substrate.

In the present disclosure, the anti-reflection membrane can be a high-and-low refraction membrane or a gradient refraction membrane with the anti-reflective effect, and it also can be the high-and-low refraction membrane including the gradient refraction membrane on the outside thereof. The gradient refraction membrane includes a plurality of pores, and the pores away from the substrate are relatively larger than the pores close to the substrate, wherein all areas from the outside to the inner side of the gradient refraction membrane can be processed by the surface pore-making process, so that a design in which the refractive index changes gradually from the outside to the inner side can be formed, and it is favorable for reducing the reflected light caused by the excessive difference in the refractive indices between the membrane layers. The measuring method of the membrane thickness of the gradient refraction membrane can select at least the first three highest vertices and measure the height of the vertices in the direction perpendicular to the tangent of the surface of the inner membrane layer in the cross-sectional view, and then calculate an average value thereof. A main material of the gradient refraction membrane can be metal oxides, aluminum oxide, aluminum nitride (AlN), aluminum hydroxide (Al(OH)$_3$), or aluminum-containing mixtures. The high-and-low refraction membrane can include high refraction membranes and low refraction membranes, and the high refraction membranes and the low refraction membranes are arranged by alternately. A refractive index of the material of the high refraction membrane is larger than 2.0, and a refractive index of the material of the low refraction membrane is smaller than 1.8. The coating material of the high-and-low refraction membrane can be (values in parentheses are refractive indices at wavelength = 587.6 nm): $MgF_2$ (1.3777), $SiO_2$ (1.4585), $Al_2O_3$ (1.7682), $HfO_2$ (1.8935), $ZnO$ (1.9269), $Sc_2O_3$ (1.9872), $AlN$ (2.0294), $Si_3N_4$ (2.0381), $Ta_2O_5$ (2.1306), $ZrO_2$ (2.1588), $ZnS$ (2.2719), $Nb_2O_5$ (2.3403), $TiO_2$ (2.6142), or $TiN$ (3.1307).

In the present disclosure, the anti-reflection membrane can be arranged on the object-side surface or the image-side surface of the lens element or the optical element, can be arranged on an object-side surface or an image-side surface of a curved-surface element with at least one surface having a phase sub-wavelength structure (Meta Lens), or can be arranged on the outside of the deep-color membrane.

In the present disclosure, the anti-reflection membrane is based on the principle of constructive interference. The membranes can be coated on the surface of the common lens element, or a single-layer membrane or a multiple-layer membrane can be coated on the surface of the plastic substrate, by physical vapor deposition (PVD), such as evaporation or sputtering, or chemical vapor deposition (CVD), such as ultra-high vacuum chemical vapor deposition, microwave plasma-assisted chemical vapor deposition, plasma-enhanced chemical vapor deposition or atomic layer deposition (ALD), etc. The preparation of coating membranes has the best of the value by the ALD, and a balance between the cost and the quality can be obtained. Further, the coating membranes can be formed on the lens material with the most appropriate refractive index, so that the best anti-reflection effect can be achieved.

In the reflection membrane of the present disclosure, the main material of the reflection metal membrane can be selected from at least one of the following materials: silver, gold, copper, aluminum, platinum, rhodium, etc. The main material of the reflection oxidation membrane can be selected from at least one of the following materials: oxides including $SiO$, $SiO_2$, $TiO_2$, $Al_2O_3$, $CeO_2$, $ZrO_2$, $ZnO$, $CrO$, $Cr_2O_3$, $Nb_2O_5$, $Ta_2O_5$, etc., $SiN$, $MgF_2$, $ZnS$, $AlN$, etc.

In the present disclosure, the reflection metal membrane is defined as a metal membrane that can reflect a light and finally image the light on the image surface, and the reflection metal membrane can be the optical coating design of a single layer or at least one layer.

In the imaging optical lens assembly of the present disclosure, there can be an air layer or without an air layer between the optical elements and the image sensor thereof. When the imaging optical lens assembly of the present disclosure has the design that an air layer is between the optical elements and the image sensor thereof, at least one surface or both two surfaces of the object-side surface and the image-side surface of the optical element can include the anti-reflection membrane. When the imaging optical lens assembly of the present disclosure has the design that there is without an air layer between the optical elements and the image sensor thereof, the object-side surface of the optical element can include the anti-reflection membrane.

In the present disclosure, the relative positional relationship of each of the membrane layers is a relative relationship along the direction perpendicular to the tangent line on the surface of the substrate under the same position.

In the present disclosure, the reflectance is measured with a single lens, and the reflectance is based on the data at an incident angle of 0 degrees as a benchmark. If the coating membrane is disposed on plural elements or plural surfaces, the reflectance thereof can be a comprehensive data after passing through the plural elements or the plural surface.

The reflectance and the transmittance of the present disclosure are based on the measurement results of the light along a direction from the substrate to the air.

In the present disclosure, the main material represents that the material accounts for at least 50% of the overall weight.

In the present disclosure, the material of the first layer close to the surface of the substrate can be $TiO_2$, $AlN$, $Al_2O_3$, $Al(OH)_3$ or aluminum-containing mixtures, can be zinc oxide or magnesium oxide, or can be a mixed material of at least one of the aforementioned aluminum oxide, zinc oxide, magnesium oxide and other metal oxides. The aforementioned materials have the characteristics of a dense structure and can strengthen the adhesion between the material and the surface of the substrate so as to avoid the peeling off of the membrane. Thus, the effect of protecting the surface of the substrate during the coating process can be achieved, and it is favorable for effectively enhancing the environmental weather resistance of the substrate.

In the present disclosure, the full field is the range from the central field (0 Field) to the maximum image high field (1.0 Field), and the full field covers the optical effective area of the surface of the lens element.

In the present disclosure, the tangent slope of the surface of the lens element is calculated with the optical axis as the horizontal direction, and the tangent slope is infinite at the paraxial region (Infinity, INF, $\infty$).

In the compensating lens element of the present disclosure, in particular, the surface change error of the plastic lens element will be excessively caused by the thickness and the high temperature, and when the number of layers is more, the effect of the temperature on surface accuracy is more obvious. Thus, by the lens compensating technology, the temperature effect problem during the coating process on the surface of the plastic material can be effectively solved, so that it is favorable for maintaining the integrity of the coatings and the high precision of the plastic lens element, and it is a key technology for achieving the imaging optical lens assembly with high quality.

In the present disclosure, the lens compensating technology can be the moldflow analysis method, the curve fitting method or the wavefront error method, but the present disclosure is not limited thereto. The moldflow analysis method is to find the three-dimensional contour nodes of the lens surface shrinking in the Z-axis through mold flow analysis, and then the three-dimensional contour nodes are converted into an aspherical curve so as to compare with the original curve to find the difference there between. At the same time, the material shrinkage rate and the surface deformation trend are considered so as to calculate and obtain the compensation value. The curve fitting method is to measure the surface contour error of the element, then the curve fitting is performed based on a function, and then an optimization algorithm method is used to approximate the fitted curve to the measurement point so as to obtain the compensation value. The function can be exponential or polynomial, and the algorithm method can be Gauss Newton method, the simplex algorithm method or the steepest descent method, etc. The wavefront error method is to measure the wavefront error (imaging error) data by the interferometer, and the wavefront error generated by the manufacturing and the assembly is comprehensively analyzed by the original design value of the wavefront error and then optimized by an optical software so as to obtain the compensation value.

In the present disclosure, the imaging optical lens assembly can be designed for a miniature lens assembly and also can be applied to the electronic devices, such as mobile devices, digital tablets, 3D (three-dimensional) image capturing applications, digital cameras, smart TVs, surveillance systems, motion sensing input devices, driving recording systems, rearview camera systems, wearable devices, unmanned aerial vehicles, etc.

According to another aspect of the present disclosure, an imaging apparatus includes the imaging optical lens assembly according to the aforementioned aspect and an image sensor. The image sensor is disposed on an image surface of the imaging optical lens assembly.

In the imaging apparatus of the present disclosure, at least one surface of the at least one lens element includes a gradient refraction membrane, wherein the gradient refraction membrane includes a plurality of pores, and the pores away from the lens element are relatively larger than the pores close to the lens element.

In the imaging apparatus of the present disclosure, the imaging optical lens assembly includes at least one optical element, and at least one surface of the at least one optical element includes a gradient refraction membrane. The gradient refraction membrane includes a plurality of pores, and the pores away from the optical element are relatively larger than the pores close to the optical element.

The imaging apparatus is a camera module, and the imaging apparatus includes the imaging optical lens assembly, a driving apparatus and the image sensor, wherein the camera module includes the imaging optical lens assembly of the present disclosure and a lens barrel for carrying the imaging optical lens assembly. The imaging apparatus can focus light from an imaged object via the imaging optical lens assembly, perform image focusing by the driving apparatus, and generate an image on the image sensor, so that the imaging information can be transmitted.

The imaging apparatus can be a wide angle imaging apparatus, an ultra-wide angle imaging apparatus, a telephoto imaging apparatus imaging apparatus (which can include a light path folding element), or a TOF module (Time-Of-Flight), but it is not limited thereof. Further, the connecting relationships between the imaging apparatus and other elements can be adaptively adjusted according to the type of the imaging apparatuses, which will not be shown and detailed described again.

The imaging apparatus can include an image sensor with superior photosensitivity and low noise (such as CMOS, CCD), and the image sensor is disposed on the image surface of the imaging optical lens assembly. Thus, it is favorable for truly presenting the good imaging quality of the imaging optical lens assembly. Further, the imaging apparatus can further include an image stabilization module, which can be a kinetic energy sensor, such as an accelerometer, a gyro sensor, and a Hall Effect sensor, but it is not limited thereto. Therefore, the variation of different axial directions of the imaging optical lens assembly can be adjusted so as to compensate the blurry image generated by motion at the moment of exposure, and it is further favorable for enhancing the image quality while photographing in motion and low light situation. Furthermore, advanced image compensation functions, such as optical image stabilizations (OIS) and electronic image stabilizations (EIS) etc., can be provided.

The imaging apparatus can be relative to a non-circular opening on the outside of an electronic device for capturing the image.

The driving apparatus can be an auto-focus module, and it can be driven by driving systems, such as voice coil motors (VCM), micro electro-mechanical systems (MEMS), piezoelectric systems, and shape memory alloys, etc. The imaging optical lens assembly can obtain a favorable imaging position by the driving apparatus so as to capture clear images when the imaged object is disposed at different object distances.

According to another aspect of the present disclosure, an electronic device includes the imaging apparatus according to the aforementioned aspect. Therefore, the image quality can be increased. Further, the electronic device can further include a control unit, a display, a storage unit, a random-access memory unit (RAM) or a combination thereof.

The electronic device can be a smart phone and includes the imaging apparatus, a flash module, a focusing assisting module, an image signal processor (ISP), a user interface and an image software processor, wherein the imaging apparatus can be a front camera or a back camera. When the user captures images of an imaged object via the user interface, the electronic device focuses and generates an image via the imaging apparatus, while compensating for low illumination via the flash module. Then, the electronic device quickly focuses on the imaged object according to its object distance information provided by the focusing assisting module and optimizes the image via the image signal processor and the image software processor, so that the image quality can be further enhanced. Further, the focusing assisting module can adopt conventional infrared or laser for obtaining quick focusing, and the user interface can utilize a touch screen or a physical button for capturing and processing the image with various functions of the image processing software.

According to the above description of the present disclosure, the following specific embodiments along with the figures are provided for further explanation.

<Comparative example 1>

In Comparative example 1, a catadioptric optical membrane is disposed on a surface of a substrate, and the substrate is made of a plastic material.

The catadioptric optical membrane of Comparative example 1 includes a reflection membrane and a matting membrane. The reflection membrane is disposed on an effective optical path area of the substrate, and the reflection membrane includes a reflection metal membrane and a reflection oxidation membrane. The reflection oxidation membrane includes a first reflection oxidation membrane and a second reflection oxidation membrane, and the second reflection oxidation membrane includes an air high-refractive-index oxidation membrane and an air low-refractive-index oxidation membrane. The matting membrane includes a deep-color membrane and a first anti-reflection membrane, the deep-color membrane includes a deep-color metal membrane and a deep-color oxidation membrane, and a main material of the deep-color metal membrane is metal chrome.

In the catadioptric optical membrane of Comparative example 1, the reflection membrane is a seven-layer structure, and details of each layer of the reflection membrane are shown in Table 1A.

| Table 1A | | | |
|---|---|---|---|
| Layer Sequence | Material | Refractive index | Physical thickness (nm) |
| Substrate | Plastic | - | - |
| 1 | Cr | - | 10 |
| 2 | $Al_2O_3$ | 1.64 | 100 |
| 3 | Al | - | 100 |
| 4 | $Al_2O_3$ | 1.64 | 40 |
| 5 | $MgF_2$ | 1.38 | 50 |
| 6 | $CeO_2$ | 2.20 | 40 |
| 7 | $SiO_2$ | 1.46 | 50 |

Table 1B shows the parameters of each layer of the catadioptric optical membrane of Comparative example 1, wherein Tro-s is a total membrane thickness of the first reflection oxidation membrane, Tro-a is a total membrane thickness of the second reflection oxidation membrane, Trm is a total membrane thickness of the reflection metal membrane, Nro-a1 is a refractive index of the air high-refractive-index oxidation membrane, and Nro-a2 is a refractive index of the air low-refractive-index oxidation membrane.

| Table 1B | | | |
|---|---|---|---|
| Tro-s/Tro-a | 0.56 | Nro-a1 | - |
| Trm/Tro-s | 1.00 | Nro-a2 | 1.64 |
| Trm/Tro-a | 0.56 | | |

Table 1C shows the parameters of the catadioptric optical membrane of Comparative example 1, wherein R4070-r is an average reflectance in a wavelength range of 400 nm - 700 nm of the reflection membrane, R4070-e is an average reflectance in a wavelength range of 400 nm - 700 nm of the matting membrane, and T4070-e is an average transmittance in the wavelength range of 400 nm - 700 nm of the matting membrane.

| Table 1C | | | |
|---|---|---|---|
| R4070-r | 89.1 | 100 × T4070-e | - |
| R4070-e | - | | |

If the definitions of parameters shown in tables of the following examples are the same as those shown in Table 1A to Table 1C, those will not be described again.

<Example 1>

In Example 1, a catadioptric optical membrane is disposed on a surface of a substrate, and the substrate is made of a plastic material.

The catadioptric optical membrane of Example 1 includes a reflection membrane and a matting membrane. The reflection membrane is disposed on an effective optical path area of the substrate, and the reflection membrane includes a reflection metal membrane and a reflection oxidation membrane. The reflection oxidation membrane includes a first reflection oxidation membrane and a second reflection oxidation membrane, the first reflection oxidation membrane includes a substrate high-refractive-index oxidation membrane and a substrate low-refractive-index oxidation membrane, and the second reflection oxidation membrane includes an air high-refractive-index oxidation membrane and an air low-refractive-index oxidation membrane. The reflection metal membrane is farther away from the substrate than the first reflection oxidation membrane, and the second reflection oxidation membrane is farther away from the substrate than the reflection metal membrane. The matting membrane is disposed on a non-effective optical path area of the substrate, wherein the matting membrane includes a deep-color membrane and a first anti-reflection membrane, the deep-color membrane includes a deep-color metal membrane and a deep-color oxidation membrane, a main material of the deep-color metal membrane is chromium oxide, and the deep-color membrane is farther away from the substrate than the first anti-reflection membrane.

In the catadioptric optical membrane of Example 1, the reflection membrane is a five-layer structure, and the five-layer structure has, in order from the surface of the substrate to the air, a first membrane layer, a second membrane layer, a third membrane layer, a fourth membrane layer and a fifth membrane layer. Details of each layer of the reflection membrane are shown in Table 2A.

| Table 2A | | | |
|---|---|---|---|
| Layer Sequence | Material | Refractive index | Physical thickness (nm) |
| Substrate | Plastic | 1.55 | - |
| 1 | $TiO_2$ | 2.32 | 54 |
| 2 | $SiO_2$ | 1.47 | 74 |
| 3 | Al | - | 150 |
| 4 | $SiO_2$ | 1.47 | 74 |
| 5 | $TiO_2$ | 2.32 | 52 |

As shown in Table 2A, the first membrane layer is made of $TiO_2$, the membrane thickness thereof is 54 nm, and the refractive index thereof is 2.32; the second membrane layer is made of $SiO_2$, the membrane thickness thereof is 74 nm, and the refractive index thereof is 1.47; the third membrane layer is made of Al, and the membrane thickness thereof is 150 nm; the fourth membrane layer is made of $SiO_2$, the membrane thickness thereof is 74 nm, and the refractive index thereof is 1.47; and the fifth membrane layer is made of $TiO_2$, the membrane thickness thereof is 52 nm, and the refractive index thereof is 2.32.

Table 2B shows the values of Tro-s/Tro-a, Trm/Tro-s, Trm/Tro-a, Nro-a1, Nro-a2, Nro-s1 and Nro-s2 of the reflection membrane of the catadioptric optical membrane of Example 1, wherein Nro-s1 is a refractive index of the substrate high-refractive-index oxidation membrane, and Nro-s2 is a refractive index of the substrate low-refractive-index oxidation membrane. In detail, Trm refers to a total membrane thickness of the reflection metal membrane, and that is the membrane thickness of the third membrane layer; Tro-s refers to a total membrane thickness of the first reflection oxidation membrane, and that is a sum of the thicknesses of the first membrane layer and the second membrane layer; Tro-a refers to a total membrane thickness of the second reflection oxidation membrane, and that is a sum of the thicknesses of the fourth membrane layer and the fifth membrane layer; Nro-s1 refers to a refractive index of the substrate high-refractive-index oxidation membrane on the first reflection oxidation membrane, and that is the refractive index of the first membrane layer; Nro-s2 refers to a refractive index of the substrate low-refractive-index oxidation membrane on the first reflection oxidation membrane, and that is the refractive index of the second membrane layer; Nro-a1 refers to a refractive index of the air high-refractive-index oxidation membrane on the second reflection oxidation membrane, and that is the refractive index of the fifth membrane layer; and Nro-a2 refers to a refractive index of the air low-refractive-index oxidation membrane on the second reflection oxidation membrane, and that is the refractive index of the fourth membrane layer.

| Table 2B | | | |
|---|---|---|---|
| Light enters reflection membrane from substrate | | Light enters reflection membrane from air | |
| Tro-s/Tro-a | 1.02 | Tro-s/Tro-a | 1.02 |
| Trm/Tro-s | 1.17 | Trm/Tro-s | 1.17 |
| Trm/Tro-a | 1.19 | Trm/Tro-a | 1.19 |
| Nro-s1 | 2.32 | Nro-a1 | 2.32 |
| Nro-s2 | 1.47 | Nro-a2 | 1.47 |

As shown in Table 2B, when the light enters the reflection membrane from the substrate, the first reflection oxidation membrane has the ability of an enhanced reflection membrane, and it is favorable for enhancing the reflecting efficacy; and the second reflection oxidation membrane is served as a protective layer, and it is favorable for enhancing the anti-oxidation of metal. On the contrary, when the light enters the reflection membrane from the air, the second reflection oxidation membrane has the abilities of an enhanced reflection membrane and a protective layer, and it is favorable for enhancing the reflecting efficacy and the anti-oxidation of metal. Further, the first reflection oxidation membrane is favorable for increasing the adhesion of the reflection metal layer to the substrate. Furthermore, the following conditions are satisfied in Example 1: Tro-s/Tro-a = 1.02; Trm/Tro-s = 1.17; Trm/Tro-a = 1.19; Nro-s1 = 2.32; Nro-s2 = 1.47; Nro-a1 = 2.32; and Nro-a2 = 1.47.

Table 2C shows the value of R4070-r of the catadioptric optical membrane of Example 1.

| Table 2C | |
|---|---|
| R4070-r | 95.4 |

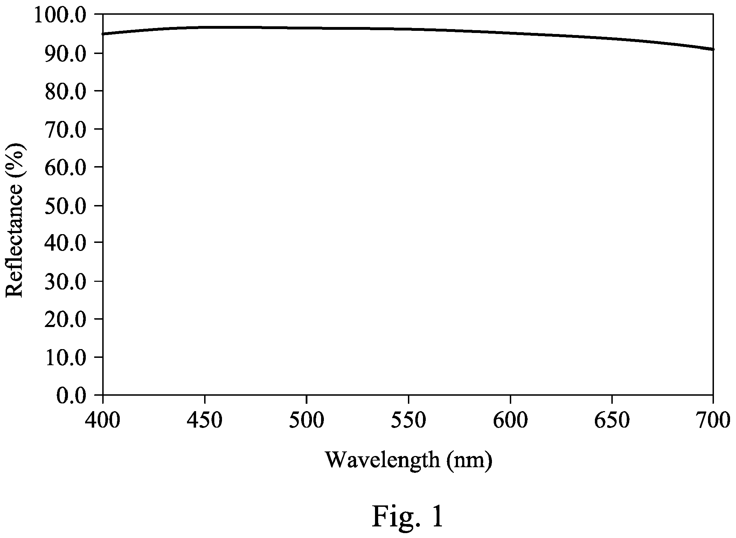

Fig. 1 is a relationship diagram between the reflectance and the wavelengths of the reflection membrane of the catadioptric optical membrane according to Example 1 of the present disclosure, and Table 2D shows the values of reflectance in the wavelength range of 400 nm - 700 nm of the reflection membrane of the catadioptric optical membrane of Example 1. Further, the following vales are measured under the condition that the light enters the reflection membrane from the substrate.

| Table 2D | |
|---|---|
| Wavelength (nm) | Reflectance (%) |
| 400 | 94.9 |
| 405 | 95.3 |
| 410 | 95.6 |
| 415 | 95.9 |
| 420 | 96.1 |
| 425 | 96.3 |
| 430 | 96.4 |

(continued)

| Table 2D | |
|---|---|
| Wavelength (nm) | Reflectance (%) |
| 435 | 96.6 |
| 440 | 96.7 |
| 445 | 96.7 |
| 450 | 96.8 |
| 455 | 96.8 |
| 460 | 96.8 |
| 465 | 96.9 |
| 470 | 96.9 |
| 475 | 96.9 |
| 480 | 96.9 |
| 485 | 96.9 |
| 490 | 96.9 |
| 495 | 96.9 |
| 500 | 96.8 |
| 505 | 96.8 |
| 510 | 96.7 |
| 515 | 96.7 |
| 520 | 96.6 |
| 525 | 96.6 |
| 530 | 96.5 |
| 535 | 96.5 |
| 540 | 96.4 |
| 545 | 96.4 |
| 550 | 96.3 |
| 555 | 96.2 |
| 560 | 96.2 |
| 565 | 96.1 |
| 570 | 96.0 |
| 575 | 96.0 |
| 580 | 95.9 |
| 585 | 95.8 |
| 590 | 95.6 |
| 595 | 95.5 |
| 600 | 95.4 |
| 605 | 95.3 |
| 610 | 95.1 |
| 615 | 95.0 |

(continued)

| Table 2D | |
|---|---|
| Wavelength (nm) | Reflectance (%) |
| 620 | 94.9 |
| 625 | 94.7 |
| 630 | 94.6 |
| 635 | 94.4 |
| 640 | 94.3 |
| 645 | 94.1 |
| 650 | 93.9 |
| 655 | 93.7 |
| 660 | 93.4 |
| 665 | 93.2 |
| 670 | 92.9 |
| 675 | 92.6 |
| 680 | 92.3 |
| 685 | 92.0 |
| 690 | 91.7 |
| 695 | 91.4 |
| 700 | 91.1 |

<Example 2>

In Example 2, a catadioptric optical membrane is disposed on a surface of a substrate, and the substrate is made of a plastic material.

The catadioptric optical membrane of Example 2 includes a reflection membrane and a matting membrane. The reflection membrane is disposed on an effective optical path area of the substrate, and the reflection membrane includes a reflection metal membrane and a reflection oxidation membrane. The reflection oxidation membrane includes a first reflection oxidation membrane and a second reflection oxidation membrane, the first reflection oxidation membrane includes a substrate high-refractive-index oxidation membrane and a substrate low-refractive-index oxidation membrane, and the second reflection oxidation membrane includes an air high-refractive-index oxidation membrane and an air low-refractive-index oxidation membrane. The reflection metal membrane is farther away from the substrate than the first reflection oxidation membrane, and the second reflection oxidation membrane is farther away from the substrate than the reflection metal membrane. The matting membrane is disposed on a non-effective optical path area of the substrate, wherein the matting membrane includes a deep-color membrane and a first anti-reflection membrane, the deep-color membrane includes a deep-color metal membrane and a deep-color oxidation membrane, a main material of the deep-color metal membrane is chromium oxide, and the deep-color membrane is farther away from the substrate than the first anti-reflection membrane.

In the catadioptric optical membrane of Example 2, the matting membrane is a fourteen-layer structure, and the fourteen-layer structure has, in order from the surface of the substrate to the air, a first membrane layer, a second membrane layer, a third membrane layer, a fourth membrane layer, a fifth membrane layer, a sixth membrane layer, a seventh membrane layer, an eighth membrane layer, a ninth membrane layer, a tenth membrane layer, an eleventh membrane layer, a twelfth membrane layer, a thirteenth membrane layer and a fourteenth membrane layer. Details of each layer of the matting membrane are shown in Table 3A.

| Table 3A | | |
|---|---|---|
| Layer Sequence | Material | Refractive index |
| Substrate | Plastic | 1.55 |
| 1 | $TiO_2$ | 2.32 |
| 2 | $SiO_2$ | 1.47 |
| 3 | $TiO_2$ | 2.32 |
| 4 | $SiO_2$ | 1.47 |
| 5 | Cr | - |
| 6 | $Cr_2O_3$ | 2.32 |
| 7 | $SiO_2$ | 1.47 |
| 8 | Cr | - |
| 9 | $SiO_2$ | 1.47 |
| 10 | Cr | - |
| 11 | $SiO_2$ | 1.47 |
| 12 | $Cr_2O_3$ | 2.32 |
| 13 | Cr | - |
| 14 | $SiO_2$ | 1.47 |
| Total membrane thickness of matting membrane (nm) | | 488 |

As shown in Table 3A, the first membrane layer is made of $TiO_2$, and the refractive index thereof is 2.32; the second membrane layer is made of $SiO_2$, and the refractive index thereof is 1.47; the third membrane layer is made of $TiO_2$, and the refractive index thereof is 2.32; the fourth membrane layer is made of $SiO_2$, and the refractive index thereof is 1.47; the fifth membrane layer is made of Cr; the sixth membrane layer is made of $Cr_2O_3$, and the refractive index thereof is 2.32; the seventh membrane layer is made of $SiO_2$, and the refractive index thereof is 1.47; the eighth membrane layer is made of Cr; the ninth membrane layer is made of $SiO_2$, and the refractive index thereof is 1.47; the tenth membrane layer is made of Cr; the eleventh membrane layer is made of $SiO_2$, and the refractive index thereof is 1.47; the twelfth membrane layer is made of $Cr_2O_3$, and the refractive index thereof is 2.32; the thirteenth membrane layer is made of Cr; and the fourteenth membrane layer is made of $SiO_2$, and the refractive index thereof is 1.47.

Table 3B shows the values of the parameters of different membrane layers of the matting membrane of the catadioptric optical membrane in Example 2, wherein tTKe is a total membrane thickness of the matting membrane, Tea-s is a total membrane thickness of the first anti-reflection membrane, Ted is a total membrane thickness of the deep-color membrane, and Ted-cr is a total membrane thickness of the deep-color metal membrane.

| Table 3B | | | |
|---|---|---|---|
| tTKe | 488 | Tea-s | 102 |
| Ted/tTKe | 0.79 | Ted-cr/Ted | 0.38 |

In detail, the values in Table 3B are measured under the condition that the light enters the matting membrane from the substrate, wherein tTKe refers to a total membrane thickness of the matting membrane, and that is a sum of the thicknesses of the first membrane layer to the fourteenth membrane layer; Tea-s refers to a total membrane thickness of the first anti-reflection membrane, and that is a sum of the thicknesses of the first membrane layer, the second membrane layer, the third membrane layer and the fourth membrane layer; Ted refers to a total membrane thickness of the deep-color membrane, and that is a sum of the thicknesses of the fifth membrane layer, the sixth membrane layer, the seventh membrane layer, the eighth membrane layer, the ninth membrane layer, the tenth membrane layer, the eleventh membrane layer, the twelfth membrane layer, the thirteenth membrane layer and the fourteenth membrane layer; and Ted-cr refers to a total membrane thickness of the deep-color metal membrane, and that is a sum of the thicknesses of the fifth membrane layer, the eighth membrane layer, the tenth membrane layer and the thirteenth membrane layer. Furthermore, the following conditions are satisfied in Example 2: tTKe = 488 nm; Ted/tTKe = 0.79; Tea-s = 102 nm; and Ted-cr/Ted = 0.38.

Table 3C shows the values of R4070-e and $100 \times$ T4070-e of the catadioptric optical membrane of Example 2.

| Table 3C | | | |
|---|---|---|---|
| R4070-e | 0.10 | $100 \times$ T4070-e | 0.38 |

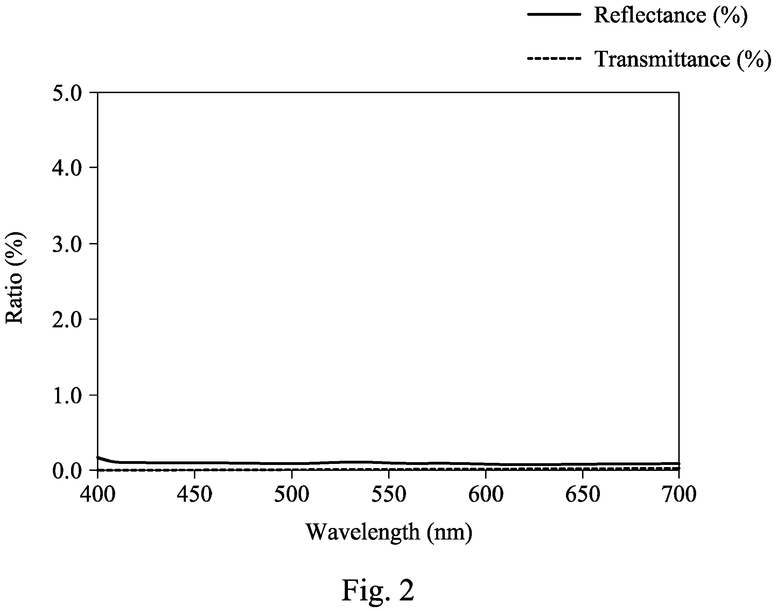

Fig. 2 is a relationship diagram between the transmittance and the wavelengths of the deep-color membrane of the matting membrane of the catadioptric optical membrane according to Example 2 of the present disclosure, and Table 3D shows the values of reflectance and transmittance in the wavelength range of 400 nm - 700 nm of the deep-color membrane of the matting membrane of the catadioptric optical membrane in Example 2. Further, the following vales are measured under the condition that the light enters the matting membrane from the substrate.

| Table 3D | | |
|---|---|---|
| Wavelength (nm) | Reflectance (%) | Transmittance (%) |
| 400 | 0.17 | 0.000 |
| 405 | 0.14 | 0.000 |
| 410 | 0.12 | 0.000 |
| 415 | 0.11 | 0.000 |
| 420 | 0.11 | 0.000 |
| 425 | 0.11 | 0.000 |
| 430 | 0.11 | 0.000 |
| 435 | 0.11 | 0.000 |
| 440 | 0.11 | 0.000 |
| 445 | 0.11 | 0.000 |
| 450 | 0.11 | 0.000 |
| 455 | 0.11 | 0.000 |
| 460 | 0.10 | 0.000 |
| 465 | 0.10 | 0.000 |
| 470 | 0.10 | 0.000 |
| 475 | 0.10 | 0.000 |
| 480 | 0.10 | 0.000 |
| 485 | 0.10 | 0.000 |
| 490 | 0.10 | 0.000 |
| 495 | 0.10 | 0.000 |
| 500 | 0.10 | 0.000 |
| 505 | 0.10 | 0.000 |
| 510 | 0.10 | 0.001 |
| 515 | 0.11 | 0.001 |
| 520 | 0.11 | 0.001 |
| 525 | 0.11 | 0.001 |
| 530 | 0.11 | 0.001 |

(continued)

| Table 3D | | |
|---|---|---|
| Wavelength (nm) | Reflectance (%) | Transmittance (%) |
| 535 | 0.11 | 0.001 |
| 540 | 0.11 | 0.001 |
| 545 | 0.11 | 0.001 |
| 550 | 0.10 | 0.001 |
| 555 | 0.10 | 0.002 |
| 560 | 0.10 | 0.002 |
| 565 | 0.10 | 0.002 |
| 570 | 0.10 | 0.002 |
| 575 | 0.10 | 0.002 |
| 580 | 0.10 | 0.003 |
| 585 | 0.10 | 0.003 |
| 590 | 0.10 | 0.003 |
| 595 | 0.10 | 0.003 |
| 600 | 0.09 | 0.004 |
| 605 | 0.09 | 0.004 |
| 610 | 0.09 | 0.004 |
| 615 | 0.09 | 0.005 |
| 620 | 0.09 | 0.005 |
| 625 | 0.09 | 0.006 |
| 630 | 0.09 | 0.006 |
| 635 | 0.09 | 0.007 |
| 640 | 0.09 | 0.007 |
| 645 | 0.09 | 0.008 |
| 650 | 0.08 | 0.009 |
| 655 | 0.08 | 0.009 |
| 660 | 0.08 | 0.010 |
| 665 | 0.08 | 0.011 |
| 670 | 0.08 | 0.012 |
| 675 | 0.08 | 0.013 |
| 680 | 0.08 | 0.013 |
| 685 | 0.08 | 0.014 |
| 690 | 0.08 | 0.015 |
| 695 | 0.08 | 0.016 |
| 700 | 0.09 | 0.018 |

If the definitions of parameters shown in tables of the following examples are the same as those shown in Table 1A to Table 3D, those will not be described again.

<Example 3>

In Example 3, a catadioptric optical membrane is disposed on a surface of a substrate, and the substrate is made of a plastic material.

The catadioptric optical membrane of Example 3 includes a reflection membrane and a matting membrane. The reflection membrane is disposed on an effective optical path area of the substrate, and the reflection membrane includes a reflection metal membrane and a reflection oxidation membrane. The reflection oxidation membrane includes a first reflection oxidation membrane and a second reflection oxidation membrane, the first reflection oxidation membrane includes a substrate high-refractive-index oxidation membrane and a substrate low-refractive-index oxidation membrane, and the second reflection oxidation membrane includes an air high-refractive-index oxidation membrane and an air low-refractive-index oxidation membrane. The reflection metal membrane is farther away from the substrate than the first reflection oxidation membrane, and the second reflection oxidation membrane is farther away from the substrate than the reflection metal membrane. The matting membrane is disposed on a non-effective optical path area of the substrate, wherein the matting membrane includes a deep-color membrane and a first anti-reflection membrane, the deep-color membrane includes a deep-color metal membrane and a deep-color oxidation membrane, a main material of the deep-color metal membrane is chromium oxide, and the deep-color membrane is farther away from the substrate than the first anti-reflection membrane.

In the catadioptric optical membrane of Example 3, the matting membrane is a twenty-layer structure, and the twenty-layer structure has, in order from the surface of the substrate to the air, a first membrane layer, a second membrane layer, a third membrane layer, a fourth membrane layer, a fifth membrane layer, a sixth membrane layer, a seventh membrane layer, an eighth membrane layer, a ninth membrane layer, a tenth membrane layer, an eleventh membrane layer, a twelfth membrane layer, a thirteenth membrane layer, a fourteenth membrane layer, a fifteenth membrane layer, a sixteenth membrane layer, a seventeenth membrane layer, an eighteenth membrane layer, a nineteenth membrane layer and a twentieth membrane layer. Details of each layer of the matting membrane are shown in Table 4A.

| Table 4A | | |
|---|---|---|
| Layer Sequence | Material | Refractive index |
| Substrate | Plastic | 1.55 |
| 1 | $TiO_2$ | 2.32 |
| 2 | $SiO_2$ | 1.47 |
| 3 | $TiO_2$ | 2.32 |
| 4 | $SiO_2$ | 1.47 |
| 5 | Cr | - |
| 6 | $Cr_2O_3$ | 2.32 |
| 7 | $SiO_2$ | 1.47 |
| 8 | Cr | - |
| 9 | $SiO_2$ | 1.47 |
| 10 | Cr | - |
| 11 | $SiO_2$ | 1.47 |
| 12 | $Cr_2O_3$ | 2.32 |
| 13 | Cr | - |
| 14 | $SiO_2$ | 1.47 |
| 15 | $TiO_2$ | 2.32 |
| 16 | $SiO_2$ | 1.47 |
| 17 | $TiO_2$ | 2.32 |
| 18 | $SiO_2$ | 1.47 |

(continued)

| Table 4A | | |
|---|---|---|
| Layer Sequence | Material | Refractive index |
| 19 | $TiO_2$ | 2.32 |
| 20 | $SiO_2$ | 1.47 |
| Total membrane thickness of matting membrane (nm) | | 735 |

As shown in Table 4A, the first membrane layer is made of $TiO_2$, and the refractive index thereof is 2.32; the second membrane layer is made of $SiO_2$, and the refractive index thereof is 1.47; the third membrane layer is made of $TiO_2$, and the refractive index thereof is 2.32; the fourth membrane layer is made of $SiO_2$, and the refractive index thereof is 1.47; the fifth membrane layer is made of Cr; the sixth membrane layer is made of $Cr_2O_3$, and the refractive index thereof is 2.32; the seventh membrane layer is made of $SiO_2$, and the refractive index thereof is 1.47; the eighth membrane layer is made of Cr; the ninth membrane layer is made of $SiO_2$, and the refractive index thereof is 1.47; the tenth membrane layer is made of Cr; the eleventh membrane layer is made of $SiO_2$, and the refractive index thereof is 1.47; the twelfth membrane layer is made of $Cr_2O_3$, and the refractive index thereof is 2.32; the thirteenth membrane layer is made of Cr; the fourteenth membrane layer is made of $SiO_2$, and the refractive index thereof is 1.47; the fifteenth membrane layer is made of $TiO_2$, and the refractive index thereof is 2.32; the sixteenth membrane layer is made of $SiO_2$, and the refractive index thereof is 1.47; the seventeenth membrane layer is made of $TiO_2$, and the refractive index thereof is 2.32; the eighteenth membrane layer is made of $SiO_2$, and the refractive index thereof is 1.47; the nineteenth membrane layer is made of $TiO_2$, and the refractive index thereof is 2.32; and the twentieth membrane layer is made of $SiO_2$, and the refractive index thereof is 1.47.

Table 4B shows the values of tTKe, Tea-s, Ted/tTKe and Ted-cr/Ted of the matting membrane of the catadioptric optical membrane of Example 3.

| Table 4B | | | |
|---|---|---|---|
| tTKe | 735 | Tea-s | 102 |
| Ted/tTKe | 0.53 | Ted-cr/Ted | 0.38 |

In detail, the values in Table 4B are measured under the condition that the light enters the matting membrane from the substrate, wherein tTKe refers to a total membrane thickness of the matting membrane, and that is a sum of the thicknesses of the first membrane layer to the twentieth membrane layer; Tea-s refers to a total membrane thickness of the first anti-reflection membrane, and that is a sum of the thicknesses of the first membrane layer, the second membrane layer, the third membrane layer and the fourth membrane layer; Ted refers to a total membrane thickness of the deep-color membrane, and that is a sum of the thicknesses of the fifth membrane layer, the sixth membrane layer, the seventh membrane layer, the eighth membrane layer, the ninth membrane layer, the tenth membrane layer, the eleventh membrane layer, the twelfth membrane layer, the thirteenth membrane layer and the fourteenth membrane layer; and Ted-cr refers to a total membrane thickness of the deep-color metal membrane, and that is a sum of the thicknesses of the fifth membrane layer, the eighth membrane layer, the tenth membrane layer and the thirteenth membrane layer. Further, the arrangement of the second anti-reflection membrane is the membrane design of the fifteenth membrane layer, the sixteenth membrane layer, the seventeenth membrane layer, the eighteenth membrane layer, the nineteenth membrane layer and the twentieth membrane layer. Furthermore, the following conditions are satisfied in Example 3: tTKe = 735 nm; Ted/tTKe = 0.53; Tea-s = 102 nm; and Ted-cr/Ted = 0.38.

<Example 4>

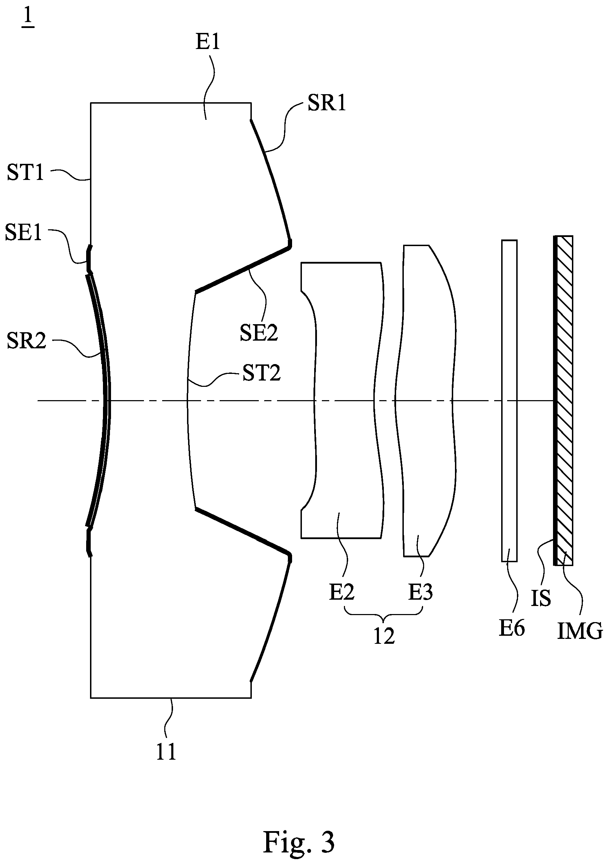

Fig. 3 is a schematic view of an imaging optical lens assembly 1 according to Example 4 of the present disclosure. The imaging optical lens assembly 1 includes a catadioptric lens assembly 11, a telephoto lens assembly 12, a filter E6 and an image surface IMG, wherein the catadioptric lens assembly 11 includes a first lens element E1, the telephoto lens assembly 12 includes a second lens element E2 and a third lens element E3, and an image sensor IS is disposed on the image surface IMG of the imaging optical lens assembly 1.

The first lens element E1 of the catadioptric lens assembly 11 includes a catadioptric optical membrane, the catadioptric lens assembly 11 includes a transmissive area and a reflective area, and both the transmissive area and the reflective area are located on the effective optical path areas of the first lens element E1. The reflective area includes a first reflective surface SR1 and a second reflective surface SR2, and the second reflective surface SR2 is located on an object-side surface of the first lens element E1. The transmissive area includes a first transmissive surface ST1 and a second transmissive surface ST2, wherein the first transmissive surface ST1 is located on the object-side surface of the first lens element E1, and the second transmissive surface ST2 is located on an image-side surface of the first lens element E1. The non-effective optical path area of the first lens element E1 includes a first matting surface SE1 and a second matting surface SE2, wherein the first matting surface SE1 is located on the object-side surface of the first lens element E1, and the second matting surface SE2 is located on the image-side surface of the first lens element E1.

In the imaging optical lens assembly 1, there are, in order along an optical path, the first transmissive surface ST1, the first reflective surface SR1, the second reflective surface SR2, the second transmissive surface ST2, the second lens element E2, the third lens element E3, the filter E6 and the image surface IMG, and the second transmissive surface ST2 is a last transmissive surface of the present example.

The object-side surface of the second lens element E2 includes an inflection point, the image-side surface of the second lens element E2 includes an inflection point, an object-side surface of the third lens element E3 includes two inflection points, and an image-side surface of the third lens element E3 includes an inflection point.

Both the first reflective surface SR1 and the second reflective surface SR2 include the reflection membrane of the catadioptric optical membrane of the present disclosure, wherein the first matting surface SE1 is located on the non-effective optical path area between the first transmissive surface ST1 and the second reflective surface SR2, the second matting surface SE2 is located on the non-effective optical path area between the first reflective surface SR1 and the second transmissive surface ST2, and both the first matting surface SE1 and the second matting surface SE2 can include the matting membrane of the catadioptric optical membrane of the present disclosure. Further, the matting membrane disposed on the first matting surface SE1 can further extend to an object side area of the second reflective surface SR2.

Furthermore, the catadioptric optical membrane can be any one of the catadioptric optical membrane of Example 1 to Example 3, and the same structures or the details will not be described again herein.

<Example 5>

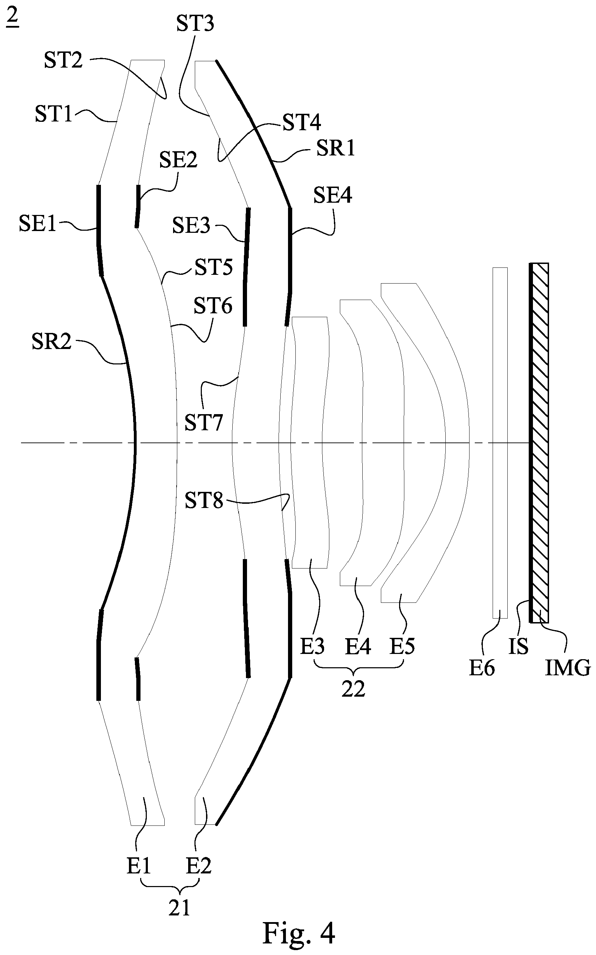

Fig. 4 is a schematic view of an imaging optical lens assembly 2 according to Example 5 of the present disclosure. The imaging optical lens assembly 2 includes a catadioptric lens assembly 21, a telephoto lens assembly 22, a filter E6 and an image surface IMG, wherein the catadioptric lens assembly 21 includes a first lens element E1 and a second lens element E2, the telephoto lens assembly 22 includes a third lens element E3, a fourth lens element E4 and a fifth lens element E5, and the image sensor IS is disposed on the image surface IMG of the imaging optical lens assembly 2.

Both the first lens element E1 and the second lens element E2 of the catadioptric lens assembly 21 includes a catadioptric optical membrane, the catadioptric lens assembly 21 includes a transmissive area and a reflective area, and both the transmissive area and the reflective area are located on the effective optical path areas of the first lens element E1 and the second lens element E2. The reflective area includes a first reflective surface SR1 and a second reflective surface SR2, the first reflective surface SR1 is located on an image-side surface of the second lens element E2, and the second reflective surface SR2 is located on an object-side surface of the first lens element E1. The transmissive area includes a first transmissive surface ST1, a second transmissive surface ST2, a third transmissive surface ST3, a fourth transmissive surface ST4, a fifth transmissive surface ST5, a sixth transmissive surface ST6, a seventh transmissive surface ST7 and an eighth transmissive surface ST8, wherein the first transmissive surface ST1 is located on the object-side surface of the first lens element E1, the second transmissive surface ST2, the fifth transmissive surface ST5 and the sixth transmissive surface ST6 are located on the image-side surface of the first lens element E1, the third transmissive surface ST3, the fourth transmissive surface ST4 and the seventh transmissive surface ST7 are located on an object-side surface of the second lens element E2, and the eighth transmissive surface ST8 is located on the image-side surface of the second lens element E2. The non-effective optical path area of the first lens element E1 includes a first matting surface SE1 and a second matting surface SE2, and the non-effective optical path area of the second lens element E2 includes a third matting surface SE3 and a fourth matting surface SE4, wherein the first matting surface SE1 is located on the object-side surface of the first lens element E1, the second matting surface SE2 is located on the image-side surface of the first lens element E1, the third matting surface SE3 is located on the object-side surface of the second lens element E2, and the fourth matting surface SE4 is located on the image-side surface of the second lens element E2.

In the imaging optical lens assembly 2, there are, in order along an optical path, the first transmissive surface ST1, the second transmissive surface ST2, the third transmissive surface ST3, the first reflective surface SR1, the fourth transmissive surface ST4, the fifth transmissive surface ST5, the second reflective surface SR2, the sixth transmissive surface ST6, the seventh transmissive surface ST7, the eighth transmissive surface ST8, the third lens element E3, the fourth lens element E4, the fifth lens element E5, the filter E6 and the image surface IMG, wherein the third transmissive surface ST3 and the fourth transmissive surface ST4 are the same surface, the fourth transmissive surface ST4 is closer to a central axis than the third transmissive surface ST3, the fifth transmissive surface ST5 and the sixth transmissive surface ST6 are the same surface, the sixth transmissive surface ST6 is closer to the central axis than the fifth transmissive surface ST5, and the eighth transmissive surface ST8 is a last transmissive surface of the present example.

Both the first reflective surface SR1 and the second reflective surface SR2 include the reflection membrane of the catadioptric optical membrane of the present disclosure, wherein the first matting surface SE1 is located on the non-effective optical path area between the first transmissive surface ST1 and the second reflective surface SR2, the second matting surface SE2 is located on the non-effective optical path area between the second transmissive surface ST2 and the fifth transmissive surface ST5, the third matting surface SE3 is located on the non-effective optical path area between the fourth transmissive surface ST4 and the seventh transmissive surface ST7, and the fourth matting surface SE4 is located on the non-effective optical path area between the first reflective surface SR1 and the eighth transmissive surface ST8. Further, the first matting surface SE1 can include the matting membrane of the catadioptric optical membrane of the present disclosure, and the second matting surface SE2, the third matting surface SE3, the fourth matting surface SE4 also can include the matting membrane or be applied with an optical coating.

The object-side surface of the second lens element E2 can be convex in a paraxial region thereof, an object-side surface of the third lens element E3 includes an inflection point, an image-side surface of the third lens element E3 includes an inflection point, an object-side surface of the fourth lens element E4 includes an inflection point, an image-side surface of the fourth lens element E4 includes an inflection point, and an object-side surface of the fifth lens element E5 includes three inflection points.

Furthermore, the catadioptric optical membrane can be any one of the catadioptric optical membrane of Example 1 to Example 3, and the same structures or the details will not be described again herein.

<Example 6>

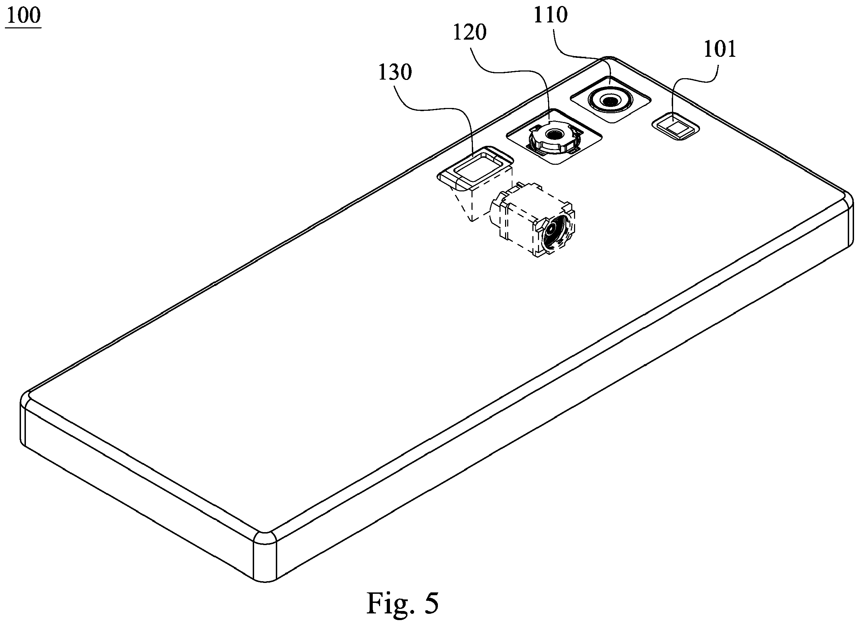

Fig. 5 is a schematic view of an electronic device 100 according to Example 6 of the present disclosure. The electronic device 100 of Example 6 is a smartphone and includes imaging apparatuses 110, 120, 130 and a flash module 101.

The imaging apparatuses 110, 120, 130 of the electronic device 100 of Example 6 can include an imaging optical lens assembly of the present disclosure, and the imaging optical lens assembly can have a configuration which is the same or similar to that according to the imaging optical lens assemblies 1, 2 of Example 4 and Example 5, so that the details will not be described again herein.

In detail, the imaging apparatus 110 can be an ultra-wide angle imaging apparatus, the imaging apparatus 120 can be a wide angle imaging apparatus, the imaging apparatus 130 can be telephoto imaging apparatus (which can include light path folding elements), or can be adaptively adjusted according to the type of the imaging apparatuses, and the present disclosure will not be limited to the aforementioned arrangement.

<Example 7>

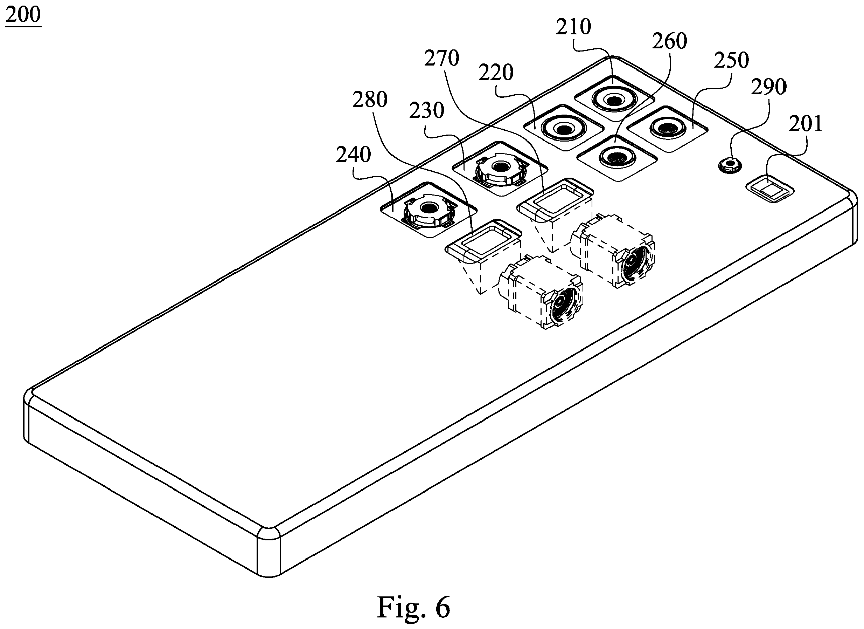

Fig. 6 is a schematic view of an electronic device 200 according to Example 7 of the present disclosure. As shown in Fig. 6, the electronic device 200 of Example 7 is a smartphone, and the electronic device 200 includes imaging apparatuses 210, 220, 230, 240, 250, 260, 270, 280, 290 and a flash module 201.

Each of the imaging apparatuses 210, 220, 230, 240, 250, 260, 270, 280, 290 of the electronic device 200 of Example 7 can include an imaging optical lens assembly of the present disclosure, and the imaging optical lens assembly can have a configuration which is the same or similar to that according to the imaging optical lens assemblies 1, 2 of Example 4 and Example 5, so that the details will not be described again herein.

In detail, the imaging apparatuses 210, 220 can respectively be an ultra-wide angle imaging apparatus, the imaging apparatuses 230, 240 can respectively be a wide angle imaging apparatus, the imaging apparatuses 250, 260 can respectively be a telephoto imaging apparatus, the imaging apparatuses 270, 280 can respectively be a telephoto imaging apparatus (which can include light path folding elements), the imaging apparatus 290 can be a TOF module, or can be adaptively adjusted according to the type of the imaging apparatuses, and the present disclosure will not be limited to the aforementioned arrangement.

<Example 8>

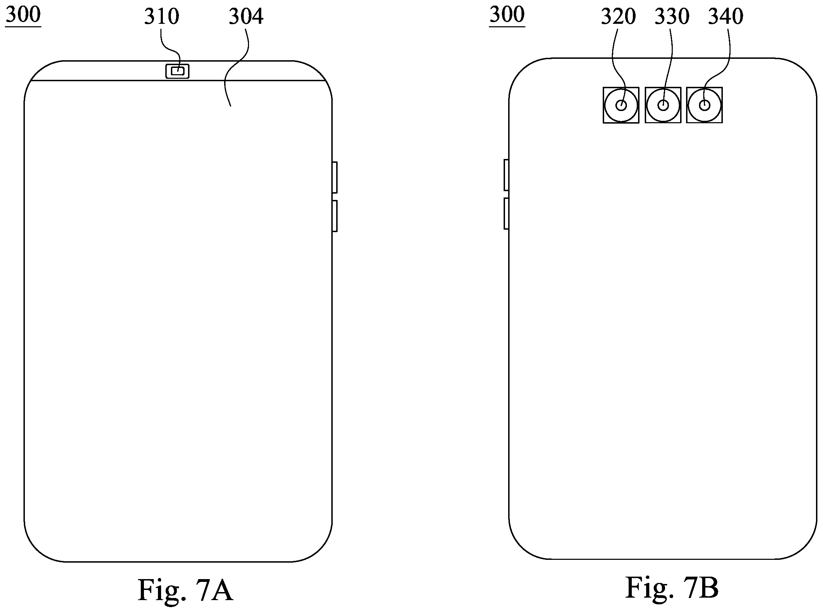

Fig. 7A is a schematic view of one side of an electronic device 300 according to Example 8 of the present disclosure, and Fig. 7B is a schematic view of another side of the electronic device 300 of Fig. 7A. As shown in Fig. 7A and Fig. 7B, the electronic device 300 of Example 8 is a smartphone, and the electronic device 300 includes imaging apparatuses 310, 320, 330, 340 and a user interface 304.

The imaging apparatus 310, 320, 330, 340 of the electronic device 300 of Example 8 can include an imaging optical lens assembly of the present disclosure, and the imaging optical lens assembly can have a configuration which is the same or similar to that according to the imaging optical lens assemblies 1, 2 of Example 4 and Example 5, so that the details will not be described again herein.

In detail, the imaging apparatus 310 corresponds to a non-circular opening located on an outer side of the electronic device 300 for capturing the image. The imaging apparatuses 320, 330, 340 can respectively be a telephoto imaging apparatus, a wide angle imaging apparatus and an ultra-wide angle imaging apparatus, or can be adaptively adjusted according to the type of the imaging apparatuses, and the present disclosure will not be limited to the aforementioned arrangement.

**Claims**

1. A catadioptric optical membrane, which is disposed on a surface of a substrate, **characterized in** comprising:

   a reflection membrane disposed on an effective optical path area of the substrate and comprising:

   a reflection metal membrane, wherein a main material of the reflection metal membrane is aluminum; and a reflection oxidation membrane comprising a first reflection oxidation membrane and a second reflection oxidation membrane, wherein the first reflection oxidation membrane comprises at least two membrane layers, a main material of each of the membrane layers is an oxide, the reflection metal membrane is farther away from the substrate than the first reflection oxidation membrane, and the second reflection oxidation membrane is farther away from the substrate than the reflection metal membrane; and

   a matting membrane disposed on a non-effective optical path area of the substrate, wherein the matting membrane comprises a deep-color membrane and a first anti-reflection membrane, the deep-color membrane comprises a deep-color metal membrane and a deep-color oxidation membrane, a main material of the deep-color metal membrane is metal chrome, a main material of the deep-color oxidation membrane is chromium oxide, and the deep-color membrane is farther away from the substrate than the first anti-reflection membrane.

2. The catadioptric optical membrane of claim 1, wherein a total membrane thickness of the first reflection oxidation membrane is Tro-s, a total membrane thickness of the second reflection oxidation membrane is Tro-a, and the following condition is satisfied:

$$0.88 \leq Tro\text{-}s/Tro\text{-}a \leq 1.50.$$

3. The catadioptric optical membrane of any one of claims 1 and 2, wherein the substrate is made of a plastic material, and the surface comprising the catadioptric optical membrane of the substrate is a curved surface.

4. The catadioptric optical membrane of any one of claims 1 to 3, wherein a total membrane thickness of the reflection metal membrane is Trm, a total membrane thickness of the first reflection oxidation membrane is Tro-s, and the following condition is satisfied:

$$1.05 \leq Trm/Tro\text{-}s \leq 4.90.$$

5. The catadioptric optical membrane of any one of claims 1 to 4, wherein a total membrane thickness of the reflection metal membrane is Trm, a total membrane thickness of the second reflection oxidation membrane is Tro-a, and the following condition is satisfied:

$$0.88 \leq Trm/Tro\text{-}a \leq 10.00.$$

6. The catadioptric optical membrane of any one of claims 1 to 5, wherein the first reflection oxidation membrane comprises a substrate high-refractive-index oxidation membrane and a substrate low-refractive-index oxidation membrane, the substrate low-refractive-index oxidation membrane is farther away from the substrate than the substrate high-refractive-index oxidation membrane, a refractive index of the substrate high-refractive-index oxidation membrane is Nro-s1, a refractive index of the substrate low-refractive-index oxidation membrane is Nro-s2, and the following condition is satisfied:

$$Nro\text{-}s1 > Nro\text{-}s2.$$

7. The catadioptric optical membrane of any one of claims 1 to 6, wherein the refractive index of the substrate high-refractive-index oxidation membrane is Nro-s1, the refractive index of the substrate low-refractive-index oxidation membrane is Nro-s2, and the following conditions are satisfied:

$$2.00 \leq Nro\text{-}s1 \leq 4.00;$$

$$1.00 \leq Nro\text{-}s2 \leq 1.80.$$

and

8. The catadioptric optical membrane of any one of claims 1 to 7, wherein the second reflection oxidation membrane comprises an air high-refractive-index oxidation membrane and an air low-refractive-index oxidation membrane, the air high-refractive-index oxidation membrane is farther away from the substrate than the air low-refractive-index oxidation membrane, a refractive index of the air high-refractive-index oxidation membrane is Nro-a1, a refractive index of the air low-refractive-index oxidation membrane is Nro-a2, and the following condition is satisfied:

$$Nro\text{-}a1 > Nro\text{-}a2.$$

9. The catadioptric optical membrane of any one of claims 1 to 8, wherein the refractive index of the air high-refractive-index oxidation membrane is Nro-a1, the refractive index of the air low-refractive-index oxidation membrane is Nro-a2, and the following conditions are satisfied:

$$2.00 \leq Nro\text{-}a1 \leq 4.00;$$

and

$$1.00 \leq Nro\text{-}a2 \leq 1.80.$$

10. The catadioptric optical membrane of any one of claims 1 to 9, wherein an average reflectance in a wavelength range of 400 nm - 700 nm of the reflection membrane is R4070-r, and the following condition is satisfied:

$$90.0\% \leq R4070\text{-}r.$$

11. The catadioptric optical membrane of any one of claims 1 to 10, wherein a total membrane thickness of the matting membrane is tTKe, and the following condition is satisfied:

$$200\ nm \leq tTKe \leq 2000\ nm.$$

12. The catadioptric optical membrane of any one of claims 1 to 11, wherein a total membrane thickness of the matting membrane is tTKe, a total membrane thickness of the deep-color membrane is Ted, and the following condition is satisfied:

$$0.10 \leq Ted/tTKe \leq 0.95.$$

13. The catadioptric optical membrane of any one of claims 1 to 12, wherein a total membrane thickness of the first anti-reflection membrane is Tea-s, and the following condition is satisfied:

$$50 \text{ nm} \leq \text{Tea-s} \leq 1000 \text{ nm}.$$

14. The catadioptric optical membrane of any one of claims 1 to 13, wherein a total membrane thickness of the deep-color membrane is Ted, a total membrane thickness of the deep-color metal membrane is Ted-cr, and the following condition is satisfied:

$$0.05 \leq \text{Ted-cr/Ted} \leq 0.85.$$

15. The catadioptric optical membrane of any one of claims 1 to 14, wherein an average reflectance in a wavelength range of 400 nm - 700 nm of the matting membrane is R4070-e, an average transmittance in the wavelength range of 400 nm - 700 nm of the matting membrane is T4070-e, and the following conditions are satisfied:

$$0\% < \text{R4070-e} \leq 1.00\%;$$

and

$$0\% < 100 \times \text{T4070-e} \leq 5.00\%.$$

16. The catadioptric optical membrane of any one of claims 1 to 15, wherein the matting membrane further comprises: a second anti-reflection membrane, wherein the second anti-reflection membrane is farther away from the substrate than the deep-color membrane.

17. The catadioptric optical membrane of any one of claims 1 to 16, wherein the matting membrane further comprises: a gradient refraction membrane, wherein the gradient refraction membrane comprises a plurality of pores, the pores away from the substrate are relatively larger than the pores close to the substrate, and the gradient refraction membrane is farther away from the substrate than the deep-color membrane.

18. An imaging optical lens assembly (1, 2), **characterized in** comprising, in order from an object side to an image side along an optical path:

    a catadioptric lens assembly (11, 21) comprising at least one lens element (E1, E2, E3, E4, E5), wherein the at least one lens element (E1, E2, E3, E4, E5) has an object-side surface towards the object side and an image-side surface towards the image side, and at least one surface of the at least one lens element (E1, E2, E3, E4, E5) comprises a catadioptric optical membrane; and
    a telephoto lens assembly (12, 22);
    wherein the catadioptric optical membrane comprises:
    a reflection membrane disposed on an effective optical path area of the at least one lens element (E1, E2, E3, E4, E5) and comprising:

        a reflection metal membrane, wherein a main material of the reflection metal membrane is aluminum; and
        a reflection oxidation membrane comprising a first reflection oxidation membrane and a second reflection oxidation membrane, wherein the first reflection oxidation membrane comprises at least two membrane layers, a main material of each of the membrane layers is an oxide, the reflection metal membrane is farther away from the at least one lens element (E1, E2, E3, E4, E5) than the first reflection oxidation membrane, and the second reflection oxidation membrane is farther away from the at least one lens element (E1, E2, E3, E4, E5) than the reflection metal membrane; and
        a matting membrane disposed on a non-effective optical path area of the at least one lens element (E1, E2, E3, E4, E5), wherein the matting membrane comprises a deep-color membrane and a first anti-reflection membrane, the deep-color membrane comprises a deep-color metal membrane and a deep-color oxidation membrane, a main material of the deep-color metal membrane is metal chrome, a main material of the deep-color oxidation membrane is chromium oxide, and the deep-color membrane is farther away from the at least one lens element (E1, E2, E3, E4, E5) than the first anti-reflection membrane.

19. The imaging optical lens assembly (1, 2) of claim 18, wherein the at least one lens element (E1, E2, E3, E4, E5) is made of a plastic material, and the surface comprising the catadioptric optical membrane of the at least one lens element (E1, E2, E3, E4, E5) is a curved surface.

20. The imaging optical lens assembly (1, 2) of any one of claims 18 and 19, wherein:

the catadioptric lens assembly (11, 21) comprises a transmissive area and a reflective area, both the transmissive area and the reflective area are located in the effective optical path area of the at least one lens element (E1, E2, E3, E4, E5), and the reflective area comprises the reflection membrane; and
the reflective area comprises a first reflective surface (SR1) and a second reflective surface (SR2), and the second reflective surface (SR2) is located on the object-side surface of the at least one lens element (E1, E2, E3, E4, E5).

21. The imaging optical lens assembly (1, 2) of any one of claims 18 to 20, wherein:

the transmissive area comprises at least one transmissive surface (ST1, ST2, ST3, ST4, ST5, ST6, ST7, ST8), and the transmissive surface (ST1, ST2, ST3, ST4, ST5, ST6, ST7, ST8) is located on the object-side surface of the at least one lens element (E1, E2, E3, E4, E5); and
the non-effective optical path area comprises at least one matting surface (SE1, SE2, SE3, SE4), the matting surface (SE1, SE2, SE3, SE4) is located on the object-side surface of the at least one lens element (E1, E2, E3, E4, E5) and is located between the transmissive surface (ST1, ST2, ST3, ST4, ST5, ST6, ST7, ST8) and the second reflective surface (SR2), and the matting surface (SE1, SE2, SE3, SE4) comprises the matting membrane.

22. The imaging optical lens assembly (1, 2) of any one of claims 18 to 21, wherein:

the first reflective surface (SR1) is located on the image-side surface of the at least one lens element (E1, E2, E3, E4, E5);
the transmissive area comprises a first transmissive surface (ST1) and a last transmissive surface, the first transmissive surface (ST1) is located on the object-side surface of the at least one lens element (E1, E2, E3, E4, E5), and the last transmissive surface is located on the image-side surface of the at least one lens element (E1, E2, E3, E4, E5); and
the non-effective optical path area comprises a first matting surface (SE1) and a second matting surface (SE2), the first matting surface (SE1) is located on the object-side surface of the at least one lens element (E1, E2, E3, E4, E5) and is located between the first transmissive surface (ST1) and the second reflective surface (SR2), the second matting surface (SE2) is located on the image-side surface of the at least one lens element (E1, E2, E3, E4, E5) and is located between the first reflective surface (SR1) and the last transmissive surface, and both the first matting surface (SE1) and the second matting surface (SE2) comprise the matting membrane.

23. The imaging optical lens assembly (1, 2) of any one of claims 18 to 22, wherein the telephoto lens assembly (12, 22) comprises at least two lens elements (E1, E2, E3, E4, E5), and at least one surface of the at least two lens elements (E1, E2, E3, E4, E5) comprises at least one inflection point.

24. The imaging optical lens assembly (1, 2) of any one of claims 18 to 23, wherein an object side of the second reflective surface (SR2) comprises the matting membrane.

25. The imaging optical lens assembly (1, 2) of any one of claims 18 to 24, wherein:

the catadioptric lens assembly (11, 21) comprises a first lens element (E1), a second lens element (E2), a transmissive area and a reflective area, and the first lens element (E1) is closer to the object side than the second lens element (E2);
both the transmissive area and the reflective area are located in the effective optical path area of the at least one lens element (E1, E2, E3, E4, E5), and the reflective area comprises the reflection membrane; and
the reflective area comprises a first reflective surface (SR1) and a second reflective surface (SR2), the first reflective surface (SR1) is located on an image-side surface of the second lens element (E2), and the second reflective surface (SR2) is located on an object-side surface of the first lens element (E1).

26. The imaging optical lens assembly (1, 2) of any one of claims 18 to 25, wherein the non-effective optical path area comprises at least one matting surface (SE1, SE2, SE3, SE4), the matting surface (SE1, SE2, SE3, SE4) is located on the object-side surface of the first lens element (E1) and is located between a first transmissive surface (ST1) of the transmissive area and the second reflective surface (SR2), and the matting surface (SE1, SE2, SE3, SE4) comprises the matting membrane.

27. The imaging optical lens assembly (1, 2) of any one of claims 18 to 26, wherein an object-side surface of the second lens element (E2) is convex in a paraxial region thereof, the telephoto lens assembly (12, 22) comprises at least three lens elements (E1, E2, E3, E4, E5), and at least one surface of the at least three lens elements (E1, E2, E3, E4, E5) comprises at least one inflection point.

28. The imaging optical lens assembly (1, 2) of any one of claims 18 to 27, wherein an object side of the second reflective surface (SR2) comprises the matting membrane.

29. An imaging apparatus (110, 120, 130, 210, 220, 230, 240, 250, 260, 270, 280, 290, 310, 320, 330, 340), **characterized in** comprising:

the imaging optical lens assembly (1, 2) of any one of claims 18 to 28; and
an image sensor (IS) disposed on an image surface of the imaging optical lens assembly (1, 2).

30. The imaging apparatus (110, 120, 130, 210, 220, 230, 240, 250, 260, 270, 280, 290, 310, 320, 330, 340) of claim 29, wherein at least one surface of the at least one lens element (E1, E2, E3, E4, E5) comprises a gradient refraction membrane, the gradient refraction membrane comprises a plurality of pores, and the pores away from the at least one lens element (E1, E2, E3, E4, E5) are relatively larger than the pores close to the at least one lens element (E1, E2, E3, E4, E5).

31. The imaging apparatus (110, 120, 130, 210, 220, 230, 240, 250, 260, 270, 280, 290, 310, 320, 330, 340) of any one of claims 29 and 30, wherein the imaging optical lens assembly (1, 2) further comprises at least one optical element, at least one surface of the at least one optical element comprises a gradient refraction membrane, the gradient refraction membrane comprises a plurality of pores, and the pores away from the at least one optical element are relatively larger than the pores close to the at least one optical element.

32. An electronic device (100, 200, 300), **characterized in** comprising:
the imaging apparatus (110, 120, 130, 210, 220, 230, 240, 250, 260, 270, 280, 290, 310, 320, 330, 340) of any one of claims 29 and 31.

Fig. 1

Fig. 2

Fig. 3

2

ST3

ST2

ST1

SE2

ST4

SR1

SE1

SE3

SE4

ST5

ST6

SR2

ST7

ST8

E3  E4  E5

E6  IS  IMG

22

E1  E2

21

Fig. 4

Fig. 5

EP 4 345 525 A2

Fig. 6

EP 4 345 525 A2

Fig. 7B

Fig. 7A